(19) Europäisches Patentamt
European Patent Office
Office européen des brevets

(11) EP 2 147 943 A1

(12) EUROPEAN PATENT APPLICATION
published in accordance with Art. 153(4) EPC

(43) Date of publication:
**27.01.2010 Bulletin 2010/04**

(21) Application number: **08753096.0**

(22) Date of filing: **16.05.2008**

(51) Int Cl.:
***C08G 61/00** (2006.01)* ***H01B 1/06** (2006.01)*
***H01M 8/02** (2006.01)* ***H01M 8/10** (2006.01)*

(86) International application number:
**PCT/JP2008/059488**

(87) International publication number:
**WO 2008/143330 (27.11.2008 Gazette 2008/48)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **17.05.2007 JP 2007132041**

(71) Applicant: **Sumitomo Chemical Company, Limited**
**Tokyo 104-8260 (JP)**

(72) Inventor: **MASUI, Kentaro**
**Tsukuba-shi**
**Ibaraki 305-0045 (JP)**

(74) Representative: **Vossius & Partner**
**Siebertstraße 4**
**81675 München (DE)**

(54) **CROSSLINKED AROMATIC POLYMER, POLYMER ELECTROLYTE, CATALYST INK, POLYMER ELECTROLYTE MEMBRANE, MEMBRANE-ELECTRODE ASSEMBLY AND FUEL CELL**

(57) A crosslinked aromatic polymer which is produced by a process comprising a reaction step of reacting an aromatic monomer having an ion exchange group of the following general formula
(1) and a poly-functional aromatic monomer of the following general formula (2) in a solvent, thereby generating a gel swollen with the solvent:

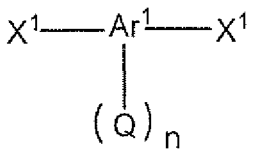
(1)

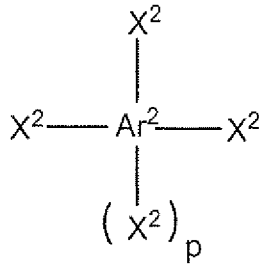
(2)

wherein, in the formulae,
$Ar^1$ represents a (2+n)-valent aromatic group,
$Ar^2$ represents a (3+p)-valent aromatic group,
Q represents an ion exchange group,
$X^1$ represents a functional group condensable with $X^1$ or $X^2$,
$X^2$ represents a functional group condensable with $X^1$ or $X^2$,
n represents an integer of 1 or more,
p represents an integer of 0 or more, and in this connection a plurality of $X^1$'s and $X^2$'s may be the same as or different from each other, respectively.

EP 2 147 943 A1

## Description

Technical Field

The present invention relates to a crosslinked aromatic polymer, polymer electrolyte, catalyst ink, polymer electrolyte membrane, membrane-electrode assembly and fuel cell.

Background Art

Recently, as a clean power supply for handling environmental problems, there is an increased expectancy for a fuel cell. Particularly, a polymer electrolyte fuel cell using a polymer electrolyte membrane having proton conductivity is paid to attention since the cell can be operated at low temperatures and, additionally, those of small size and lightweight can be obtained.

The polymer electrolyte fuel cell (hereinafter, abbreviated as "fuel cell") has a membrane-electrode assembly (hereinafter, referred to as "MEA" in some cases) constituted basically of two electrode catalyst layers and a polymer electrolyte membrane sandwiched by the electrode catalyst layers. As polymer electrolytes used for the polymer electrolyte membrane and the catalyst layer of this MEA, for example, perfluoroalkylsulfonic acid polymers typified by Nafion (manufactured by Dupont, registered trademark) are used mainly because of excellent properties as a fuel cell. However, this material is very expensive, has low heat resistance, and cannot be removed easily by combustion due to a lot of fluorine atoms contained in the molecule, and it is difficult to recover expensive catalysts such as platinum in the catalyst layer.

Consequently, there are recently intensified developments of polymer electrolytes which are cheap and excellent in properties, as a polymer electrolyte material as an alternative to the perfluoroalkylsulfonic acid polymer. For example, an aromatic polyether sulfone block copolymer is suggested composed of a hydrophilic segment containing a sulfonic group and a hydrophobic segment containing no sulfonic group (see, for example, JP-A No. 2003-031232). In contrast to the block copolymer, a random copolymer in which ion exchange groups are distributed randomly in the polymer chain is also investigated (see, for example, JP-A No. 2006-137792).

However, for practical application of fuel cell, there are required further improvement in proton conductivity (ion conductivity), improvement in water retention property, especially, improvement in water retention property by which water can be incorporated to give proton conductivity even under low humidity conditions. If the number of ion exchange groups contained in a polymer electrolyte is increased for improving the ion conductivity, water absorbing property and water retention property of the polymer electrolyte, water resistance thereof lowers, and when immersed in water, a part of the polymer electrolyte tends to be eluted to lower weight retention.

The present invention has been made under such circumstances, and an object thereof is to provide a crosslinked aromatic polymer having sufficiently high water retention property and water resistance, and showing sufficiently excellent proton conductivity even under low humidity conditions, and a polymer electrolyte, polymer electrolyte membrane, catalyst ink, membrane-electrode assembly and fuel cell each using this polymer. Further, the present invention has an object of providing a process for producing the crosslinked aromatic polymer.

Disclosure of the Invention

For attaining the above-described objects, the present invention provides a crosslinked aromatic polymer which is produced by a process comprising a reaction step of reacting an aromatic monomer having an ion exchange group of the following general formula (1) and a poly-functional aromatic monomer of the following general formula (2) in a solvent, thereby generating a gel swollen with the solvent:

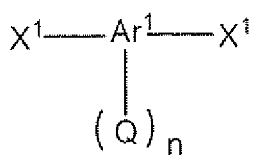

(1)

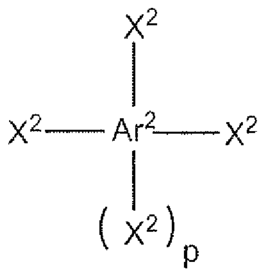

(2)

wherein, in the formulae, $Ar^1$ represents a (2+n)-valent aromatic group, $Ar^2$ represents a (3+p)-valent aromatic group, Q represents an ion exchange group, $X^1$ represents a functional group condensable with $X^1$ or $X^2$, $X^2$ represents a functional group condensable with $X^1$ or $X^2$, n represents an integer of 1 or more, and p represents an integer of 0 or more. In this connection, a plurality of $X^1$'s and $X^2$'s may be the same as or different from each other, respectively.

The condensable functional groups will be described in detail. $X^1$ means a functional group with which $Ar^1$-$Ar^1$ can be connected directly or via a di-valent group or a di-valent atomic group by causing a condensation reaction between $X^1$ on $Ar^1$ and $X^1$ on another $Ar^1$, in the case of mutual reaction of aromatic monomers of the general formula (1), when illustrated in a unit reaction in the above-described reaction step. In the case of a unit reaction between an aromatic monomer of the general formula (1) and an aromatic monomer of the general formula (2), $X^1$ means a functional group with which $Ar^1$-$Ar^2$ can be connected directly or via a di-valent group or a di-valent atomic group by causing a condensation reaction between $X^1$ on the former $Ar^1$ and $X^2$ on the latter $Ar^2$. Likewise, $X^2$ means a functional group with which $Ar^2$-$Ar^2$ can be connected directly or via a di-valent group or a di-valent atomic group by causing a condensation reaction between $X^2$ on $Ar^2$ and $X^2$ on another $Ar^2$, in the case of mutual reaction of aromatic monomers of the general formula (2), when illustrated in a unit reaction in the above-described reaction step. In the case of a unit reaction between an aromatic monomer of the general formula (2) and an aromatic monomer of the general formula (1), $X^2$ means a functional group with which $Ar^2$-$Ar^1$ can be connected directly or via a di-valent group or a di-valent atomic group by causing a condensation reaction between $X^2$ on the former $Ar^2$ and $X^1$ on the latter $Ar^1$.

In the present invention, owing to the action of the above-described poly-functional aromatic monomer, the generated polymer forms a three-dimensional structure, becomes insoluble in a polymerization solvent, and absorbs a part or all of the polymerization solvent to be swollen with the solvent, thereby generating a gel. In the present invention, the term "generating a gel" means a phenomenon in which the gel swollen with the absorbed polymerization solvent is precipitated or dispersed in the polymerization solvent or the whole reaction mixture of the polymerization reaction loses flowability as a result of absorption of all of the polymerization solvent. Alternatively, "generating a gel" is expressed also as "gelled", below.

Brief Explanation of Drawing

Fig. 1 is a schematic view of the cross-sectional constitution of a fuel cell according to a suitable embodiment. Description of marks

- 10: fuel cell
- 12: polymer electrolyte membrane
- 14a, 14b: catalyst layer
- 16a, 16b: gas diffusion layer
- 18a, 18b: separator
- 20: MEA

Modes for Carrying Out the Invention

The crosslinked aromatic polymer of the present invention is a polymer synthesized from the above-described aromatic monomer having an ion exchange group and the above-described poly-functional aromatic monomer, and is an aromatic polymer having an ion exchange group and in which the polymer chain forms a three-dimensional structure. As a result, the crosslinked aromatic polymer has sufficiently high water retention property and water resistance, and manifests sufficiently excellent proton conductivity even under low humidity conditions.

Conventional crosslinked aromatic polymers do not manifest sufficient water retention property even if an ion exchange group is contained since its molecule chain is usually rigid, in contrast, the present inventors have found that if, in a process of producing the crosslinked aromatic polymer, a step of generating a gel with the solvent used in this production is contained, then, the resultant crosslinked aromatic polymer shows extremely excellent water retention property.

The content of the poly-functional aromatic monomer is preferably 0.01 to 50 mole% with respect to the total amount of the above-described aromatic monomer having an ion exchange group and the above-described poly-functional aromatic monomer. When the content of the poly-functional aromatic monomer is in this range, the resulting crosslinked aromatic polymer is still more excellent in water retention property and water resistance and manifests more excellent proton conductivity even under low humidity conditions.

It is preferable that the above-described $X^1$ and the above-described $X^2$ are groups selected from the group consisting of halogeno groups, 4-methylphenylsulfonyloxy group and trifluoromethylsulfonyloxy group. In this case, all of connections of $Ar^1$-$Ar^1$, $Ar^2$-$Ar^2$ and $Ar^1$-$Ar^2$ are a direct bond in the crosslinked aromatic polymer, thus, the crosslinked aromatic polymer is capable of manifesting excellent heat resistance.

In the above-described reaction step, a bi-functional aromatic monomer having no ion exchange group of the following general formula (3) may be contained, in addition to the aromatic monomers of the above-described general formulae (1) and (2):

$$X^3\text{-}Ar^3\text{-}X^3 \qquad (3)$$

wherein, in the formula, $Ar^3$ represents a di-valent aromatic group, and $X^3$ represents a functional group condensable with $X^1$ or $X^2$. In this connection, a plurality of $X^3$'s may be the same as or different from each other.

In the case of the aromatic monomer of the general formula (1) and the aromatic monomer of the general formula (2), the ion exchange capacity of the crosslinked aromatic polymer is designed by the copolymerization ratio of the former and the crosslinked density thereof is designed by the copolymerization ratio of the latter. In contrast, when the aromatic monomer of the general formula (3) is copolymerized, there is a merit that a crosslinked aromatic polymer having desired ion exchange capacity can be produced.

The ion exchange group is preferably a group selected from the group consisting of a sulfonic group, perfluoroalkylenesulfonic group, perfluorophenylenesulfonic group, sulfonylimide group, phosphonic group and carboxyl group, and particularly preferable are a sulfonic group, perfluoroalkylenesulfonic group and perfluorophenylenesulfonic group. By the presence of such an ion exchange group, the water retention property and water resistance of the crosslinked aromatic polymer are further improved, and the proton conductivity thereof under low humidity conditions is also improved.

The crosslinked aromatic polymer of the present invention has an ion exchange capacity of preferably 0.5 to 10.0 meq/g. By such an ion exchange capacity, the proton conductivity and water resistance are still more excellent in the case of use of the crosslinked aromatic polymer as a polymer electrolyte. Such an ion exchange capacity can be designed by regulating the copolymerization ratio of the aromatic monomer of the general formula (1) and by copolymerizing other bi-functional aromatic monomers, and thus, a crosslinked aromatic polymer having desired ion exchange capacity can be produced.

Further, the present invention provides a production process of a crosslinked aromatic polymer, comprising a reaction step of reacting an aromatic monomer having an ion exchange group of the following general formula (1) and a poly-functional aromatic monomer of the following general formula (2) in a solvent, thereby generating a gel swollen with the solvent. By this, a crosslinked aromatic polymer having sufficiently high water retention property and water resistance and showing sufficiently excellent proton conductivity even under low humidity conditions can be obtained.

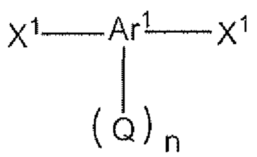

(1)

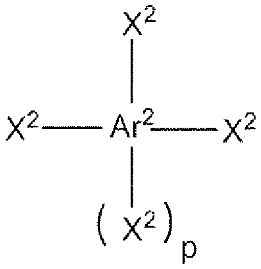

(2)

wherein, in the formulae, $Ar^1$ represents a (2+n)-valent aromatic group, $Ar^2$ represents a (3+p)-valent aromatic group, Q represents an ion exchange group, $X^1$ represents a functional group condensable with $X^1$ or $X^2$, $X^2$ represents a functional group condensable with $X^1$ or $X^2$, n represents an integer of 1 or more, and p represents an integer of 0 or more. In this connection, a plurality of $X^1$'s and $X^2$'s may be the same as or different from each other, respectively.

The present invention provides a polymer electrolyte containing the crosslinked aromatic polymer described above. Such a polymer electrolyte shows sufficiently high water retention property and water resistance, and manifests sufficiently high proton conductivity even under low humidity conditions.

The present invention provides a polymer electrolyte dispersed solution obtained by dispersing the above-described crosslinked aromatic polymer in a dispersion medium. Using this polymer electrolyte dispersed solution, a polymer electrolyte membrane suitable as a proton conductive membrane can be formed. The polymer electrolyte dispersed solution can be combined with a catalyst substance to give a catalyst ink. This term catalyst ink is widely used in the fuel cell-correlated field, and means a liquid composition for forming a catalyst layer. The catalyst ink containing a crosslinked aromatic polymer of the present invention can be suitably used since it can dramatically improve the power generation performance of a fuel cell. The above-described catalyst substance is a metal and/or alloy having a catalyst performance correlated with a cell reaction of a fuel cell, and usually, those completed with an electric conductive material such as carbon materials and conductive ceramics are used.

In the polymer electrolyte dispersed solution of the present invention, the content of the above-described crosslinked aromatic polymer is preferably 0.001 to 30 wt%. By inclusion of the crosslinked aromatic polymer in an amount within this range, production of the above-described catalyst ink and/or formation of a polymer electrolyte membrane becomes easy.

The polymer electrolyte dispersed solution can be produced by a process comprising a reaction step of reacting an aromatic monomer having an ion exchange group of the above-described general formula (1) and a poly-functional aromatic monomer of the above-described general formula (2) in a solvent, thereby generating a gel swollen with the solvent, a solvent substitution step of substituting the solvent in the a gel with water, thereby obtaining a water-absorbed gel, and a dispersion step of dispersing the above-described water-absorbed gel in a dispersion medium.

The polymer electrolyte dispersed solution can also be produced by a process comprising a reaction step of reacting an aromatic monomer having an ion exchange group of the above-described general formula (1) and a poly-functional aromatic monomer of the above-described general formula (2) in a solvent, thereby generating a gel swollen with the solvent, a solvent removal step of removing the solvent from the above-described gel, and a dispersion step of dispersing the substance obtained in the solvent removal step with a dispersion medium:

In the polymer electrolyte dispersed solution produced by such methods, the polymer electrolyte is uniformly dispersed in a dispersion medium, and the catalyst layer and polymer electrolyte membrane formed from the above-described polymer electrolyte dispersed solution show sufficiently high water retention property and water resistance, and can manifest sufficiently high proton conductivity even under low humidity conditions.

In the polymer electrolyte dispersed solution, it is preferable that the above-described dispersion medium contains water. By this, the dispersibility of electric conductive materials, particularly, the dispersibility of carbon materials tends to be excellent in preparing a catalyst ink using the above-described polymer electrolyte dispersed solution. Use of such a catalyst ink is preferable since then the resultant catalyst layer shows improved uniformity. Further, there is a merit that, in industrially producing a member of a membrane-electrode assembly using the polymer electrolyte dispersed solution, environmental loads such as waste liquid are reduced.

The present invention provides a catalyst ink containing the above-described polymer electrolyte and catalyst substance, and a catalyst ink containing the above-described polymer electrolyte dispersed solution and catalyst substance. Such a catalyst ink is suitable as a constituent material of a catalyst layer disposed adjacent to a proton conductive membrane.

The present invention provides a polymer electrolyte membrane containing the above-described polymer electrolyte, and a polymer electrolyte membrane obtained from the above-described polymer electrolyte dispersed solution. Since such a polymer electrolyte membrane shows excellent proton conductivity even under low humidity conditions, a

fuel cell using this polymer electrolyte membrane as a proton conductive membrane shows extremely high efficiency.

The present invention provides a polymer electrolyte composite membrane composed of a porous substrate having a polymer electrolyte in a pore wherein the polymer electrolyte is a polymer electrolyte composed of the above-described crosslinked aromatic polymer. Further, the present invention provides a polymer electrolyte composite membrane obtained by impregnating the above-described polymer electrolyte dispersed solution into a porous substrate. Such polymer electrolyte composite membranes shows not only sufficiently high water retention property, water resistance and proton conductivity, but also excellent membrane strength, flexibility and durability.

The present invention provides MEA having a polymer electrolyte membrane and a catalyst layer formed on the polymer electrolyte membrane wherein the polymer electrolyte membrane contains the above-described polymer electrolyte. Further, the present invention provides MEA having a polymer electrolyte membrane and a catalyst layer formed on the polymer electrolyte membrane wherein the catalyst layers is formed from the above-described catalyst ink. Such MEA's show sufficiently high water retention property and water resistance, and also manifest sufficiently excellent proton conductivity under low humidity conditions, since the polymer electrolyte membrane and/or catalyst layer contains a polymer electrolyte of the present invention.

Further, the present invention provides a fuel cell having a pair of separators, a pair of gas diffusion layers disposed between the pair of separators, and a MEA disposed between the pair of gas diffusion layers, wherein the MEA is the above-described MEA of the present invention. Such a fuel cell shows sufficiently high water retention property and water resistance and also manifests sufficiently excellent proton conductivity, thus, electric power generation at high efficiency is possible, since the fuel cell has the MEA of the present invention.

Suitable embodiments of the present invention will be illustrated in detail below referring if necessary to a drawing. In the drawing, the same elements are endowed with the same marks, and overlapping explanations are omitted. The dimensional ratio of the drawing is not limited to the illustrated ratio.

(Crosslinked aromatic polymer)

The crosslinked aromatic polymer of the present invention is produced by a process comprising a reaction step of reacting an aromatic monomer having an ion exchange group and a poly-functional aromatic monomer in a solvent, thereby generating a gel swollen with the solvent.

The aromatic monomer having an ion exchange group according to the present invention is a compound of the above-described general formula (1). In the general formula (1), $Ar^1$ is a (2+n)-valent aromatic group having at least one aromatic ring. As the aromatic ring, a benzene ring or naphthalene ring is preferable. The above-described aromatic group may also be one obtained by connection of several aromatic rings via a direct bond, an alkylene group having 1 to 10 carbon atoms or a bond of the following formulae (i) to (xii).

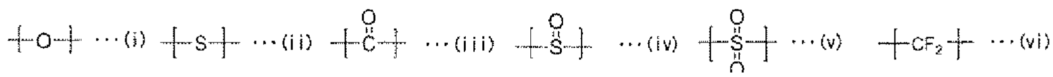
···(i) ···(ii) ···(iii) ···(iv) ···(v) ···(vi)

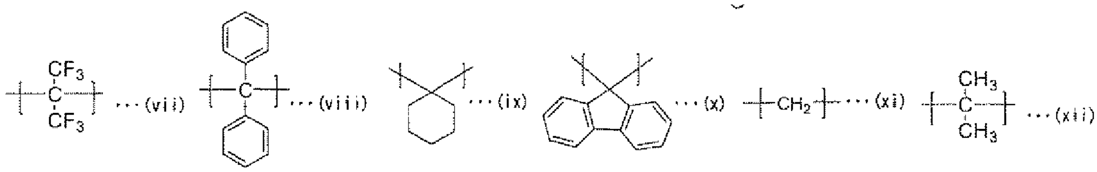
···(vii) ···(viii) ···(ix) ···(x) ···(xi) ···(xii)

Further, the above-described aromatic group may be substituted by an alkyl group having 1 to 10 carbon atoms, an alkoxy group having 1 to 10 carbon atoms, an aryl group having 6 to 10 carbon atoms, an aryloxy group having 6 to 10 carbon atoms, a nitro group or a benzoyl group.

The alkyl group having 1 to 10 carbon atoms may be any of linear, branched or cyclic, and examples thereof include a methyl group, ethyl group, n-propyl group, isopropyl group, n-butyl group, sec-butyl group, tert-butyl group, isobutyl group, n-pentyl group, 2,2-dimethylpropyl group, cyclopentyl group, n-hexyl group, cyclohexyl group, 2-methylpentyl group, 2-ethylhexyl group.

The alkoxy group having 1 to 10 carbon atoms may be any of linear, branched or cyclic, and examples thereof include a methoxy group, ethoxy group, n-propyloxy group, isopropyloxy group, n-butyloxy group, sec-butyloxy group, tert-butyloxy group, isobutyloxy group, n-pentyloxy group, 2, 2-dimethylpropyloxy group, cyclopentyloxy group, n-hexyloxy group, cyclohexyloxy group, 2-methylpentyloxy group, 2-ethylhexyloxy group.

Examples of the aryl group having 6 to 10 carbon atoms include a phenyl group, naphthyl group, and examples

of the aryloxy group having 6 to 10 carbon atoms include a phenoxy group, naphthyloxy group.

These groups may be further substituted by a group selected from the group consisting of an amino group, methoxy group, ethoxy group, isopropyloxy group, phenyl group, naphthyl group, phenoxy group and naphthyloxy group.

As the ion exchange group represented by Q in the general formula (1) , an acidic group is preferable since in this case if a polymer electrolyte is applied to a fuel cell, power generation performance is more excellent. Examples thereof in the form of free acid include a carboxyl group (-COOH), phosphonic group ($-PO_3H_2$), phosphoric group ($-OPO_3H_2$), sulfonic group ($-SO_3H$), sulfonylimide group ($-SO_2NHSO_2-R^1$, $R^1$ represents an alkyl group having 1 to 6 carbon atoms or an aryl group having 6 to 10 carbon atoms), perfluoroalkylenesulfonic group ($-R^2-SO_3H$, $R^2$ represents an alkylene group having 1 to 6 carbon atoms in which a part or all of hydrogen atoms are substituted by a fluorine atoms), perfluorophenylenesulfonic group ($-R^3-SO_3H$, $R^3$ represents an arylene group having 6 to 10 carbon atoms in which a part or all of hydrogen atoms are substituted by a fluorine atoms), perfluoroalkylenesulfonylimide group ($-SO_2NHSO_2-R^4$, $R^4$ represents an alkylene group having 1 to 6 carbon atoms or an arylene group having 6 to 10 carbon atoms in which a part or all of hydrogen atoms are substituted by a fluorine atoms). Because of more excellent proton conductivity, a sulfonic group, perfluoroalkylenesulfonic group and perfluorophenylenesulfonic group showing a pKa value (acid dissociation constant) of 2 or less are preferable. When these ion exchange groups are proton acids, these groups may form salts with an alkali metal ion, alkaline earth metal ion or ammonium ion. The ion exchange groups forming these salts can be returned to the form of free acid by performing ion exchange by an acid treatment, after synthesis of a crosslinked aromatic polymer of the present invention.

The above-described ion exchange group may be connected directly to an aromatic ring, or may be connected to an aromatic ring via a di-valent aromatic group, an alkylene group having 1 to 10 carbon atoms or a bond of the above-described formulae (i) to (xii).

In the general formula (1), the group represented by $X^1$ is a condensable functional group causing a condensation reaction with a functional group $X^2$ in an aromatic monomer of the general formula (2), as described above. $X^1$ may also be a functional group causing a condensation reaction with $X^1$ in another compound of the general formula (1), namely, a self-condensable functional group. $X^1$ includes leaving functional groups such as halogeno groups (fluoro group, chloro group, bromo group, iodo group and the like), pseudohalogeno groups (4-methylphenylsulfonyloxy group, trifluoromethylsulfonyloxy group, nitro group and the like), and organometal groups; nucleophilic functional groups (nucleophilic group) such as a hydroxyl group, and mercapto group; unsaturated groups such as alkenyl group, and alkynyl group.

The organometal group includes groups containing a boron atom of the following general formula (10) capable of causing the Suzuki coupling reaction.

$$-B(OQ^1)(OQ^2) \qquad (10)$$

In the formulae, $Q^1$ and $Q^2$ represent each independently a hydrogen atom, an alkyl group having 1 to 10 carbon atoms or an aryl group having 6 to 10 carbon atoms, and $Q^1$ and $Q^2$ may be connected to form a ring.

Further, the organometal group includes groups of the following general formula (11) causing a condensation reaction with a halogeno group or pseudohalogeno group connected to an aromatic ring thereby allowing mutual connection of aromatic rings ($Ar^1$ and $Ar^1$, $Ar^1$ and $Ar^2$, or $Ar^2$ and $Ar^2$) by a direct bond, as used in the Kumada•Tamao coupling, the Negishi coupling, the Migita•Kosugi•Stille coupling and the Hiyama coupling, like in the Suzuki coupling.

$$-M-X\ g \qquad (11)$$

In the formula, M represents a lithium, sodium, magnesium, zinc, copper, aluminum, tin or silicon atom, g represents an integer of 0 to 3, and X represents a halogeno group, hydroxyl group, alkyl group having 1 to 10 carbon atoms, alkoxy group having 1 to 10 carbon atoms, aryl group having 5 to 10 carbon atoms or aryloxy group having 6 to 10 carbon atoms.

Regarding the above-described halogeno group, pseudohalogeno group or group of the general formula (11), the mutual combination of halogeno groups, pseudohalogeno groups or groups of the general formula (11) is a concept included in the above-described self-condensable functional group. The group selected from the above-described nucleophilic groups, unsaturated groups and groups of the general formula (10) is a group capable of causing condensation with a halogeno group or pseudohalogeno group to generate a bond between aromatic rings. When an aromatic monomer having a nucleophilic group or unsaturated group as the functional group is used as the condensable functional group, the aromatic monomer to be used in the above-described reaction step is selected so that the halogeno group or pseudohalogeno group causing a condensation reaction with these functional groups is present in an amount of 0.7-fold equivalent or more.

In the above-described examples, $X^1$ is more preferably a halogeno group, pseudohalogeno group or hydroxyl group, and as the pseudohalogeno group, suitable is a 4-methylphenylsulfonyloxy group or trifluoromethylsulfonyloxy group. Of them, a halogeno group is particularly preferable. A plurality of $X^1$'s may be the same or different.

The pseudohalogeno group described above means a functional group showing a reactive behavior like the halogeno group, and a leaving group in the pseudohalide corresponds to this. For the pseudohalide, for example, descriptions in Kagaku Dojin, "Seni kinzoku ga hiraku yukigosei", October 10, 1997, p. 15 are referred to.

As the compound of the general formula (1), compounds having a halogeno group as $X^1$ and having a sulfonic group as the ion exchange group are preferable. Such compounds include 2,4-dichlorobenzenesulfonic acid, 2,5-dichlorobenzenesulfonic acid, 3,5-dichlorobenzenesulfonic acid, 2,4-dibromobenzenesulfonic acid, 2,5-dibromobenzenesulfonic acid, 3,5-dibromobenzenesulfonic acid, 2,4-diiodobenzenesulfonic acid, 2,5-diiodobenzenesulfonic acid, 3,5-diiodobenzenesulfonic acid, 2,4-dichloro-5-methylbenzenesulfonic acid, 2,5-dichloro-4-methylbenzenesulfonic acid, 2,4-dibromo-5-methylbenzenesulfonic acid, 2,5-dibromo-4-methylbenzenesulfonic acid, 2,4-diiodo-5-methylbenzenesulfonic acid, 2,5-diiodo-4-methylbenzenesulfonic acid, 2,4-dichloro-5-methoxybenzenesulfonic acid, 2,5-dichloro-4-methoxybenzenesulfonic acid, 2,4-dibromo-5-methoxybenzenesulfonic acid, 2,5-dibromo-4-methoxybenzenesulfonic acid, 2,4-diiodo-5-methoxybenzenesulfonic acid, 2,5-diiodo-4-methoxybenzenesulfonic acid, 3,3'-dichlorobiphenyl-2,2'-disulfonic acid, 3,3'-dibromobiphenyl-2,2'-disulfonic acid, 3,3'-diiodobiphenyl-2,2'-disulfonic acid, 4,4'-dichlorobiphenyl-2,2'-disulfonic acid, 4,4'-dibromobiphenyl-2,2'-disulfonic acid, 4,4'-diiodobiphenyl-2,2'-disulfonic acid, 4,4'-dichlorobiphenyl-3,3'-disulfonic acid, 4,4'-dibromobiphenyl-3,3'-disulfonic acid, 4,4'-diiodobiphenyl-3,3'-disulfonic acid, 5,5'-dichlorobiphenyl-2,2'-disulfonic acid, 5,5'-dibromobiphenyl-2,2'-disulfonic acid, 5, 5'-diiodobiphenyl-2,2'-disulfonic acid and compounds of the following formulae (A-1) to (A-52), (B-1) to (B-4), (C-1) to (C-12).

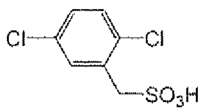
A-1

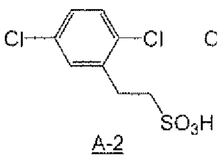
A-2

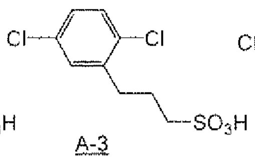
A-3

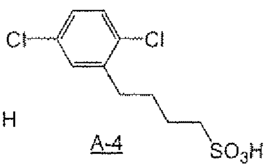
A-4

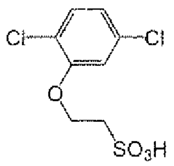
A-5

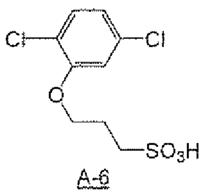
A-6

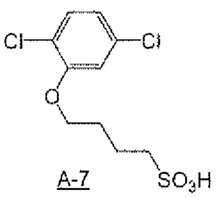
A-7

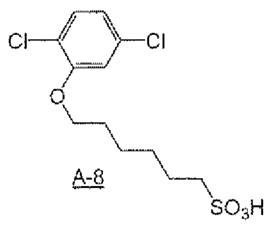
A-8

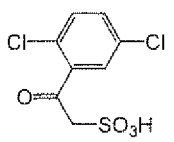
A-9

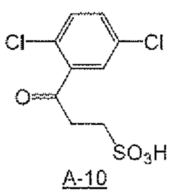
A-10

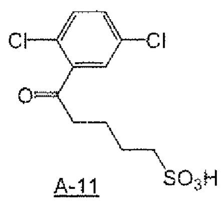
A-11

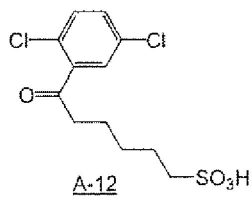
A-12

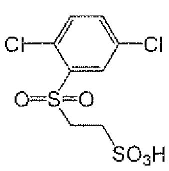
A-13

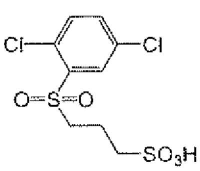
A-14

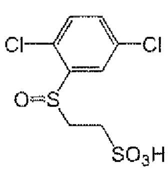
A-15

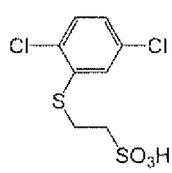
A-16

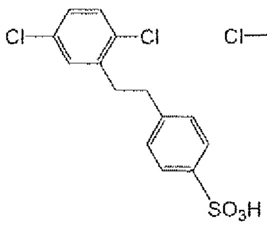
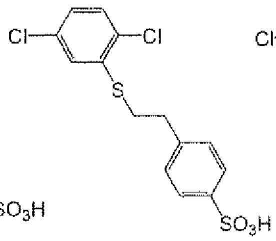
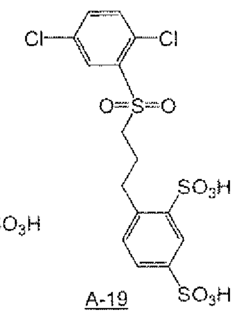
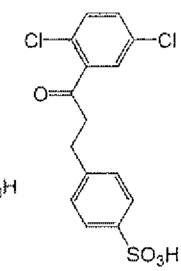

A-17 A-18 A-19 A-20

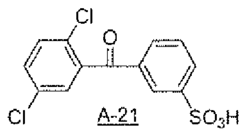

A-21

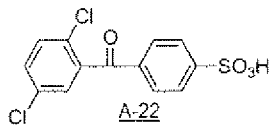

A-22

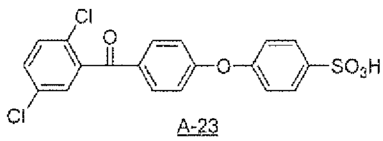

A-23

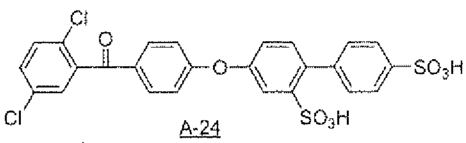

A-24

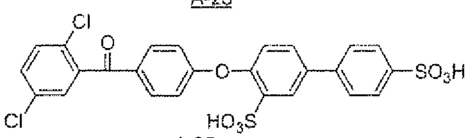

A-25

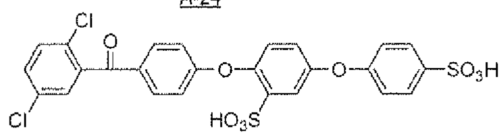

A-26

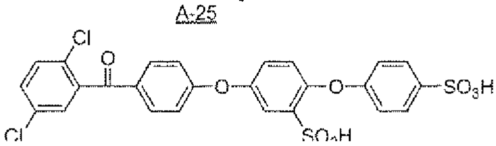

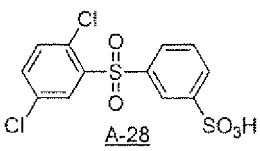

A-28

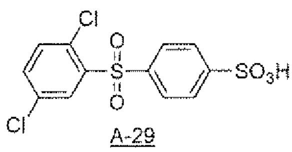

A-29

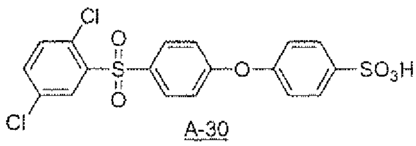

A-30

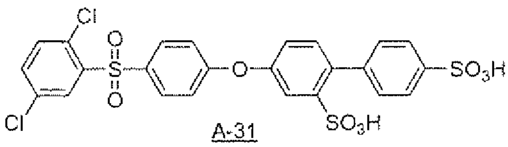

A-31

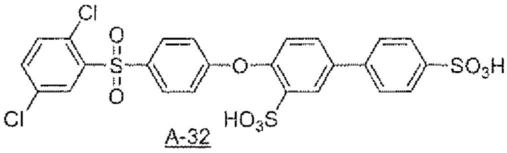

A-32

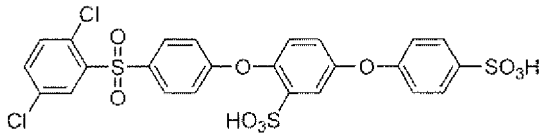

A-33

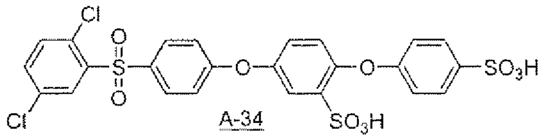

A-34

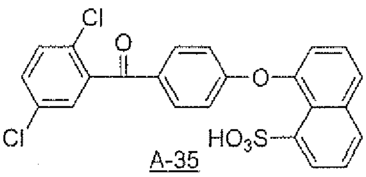

A-35

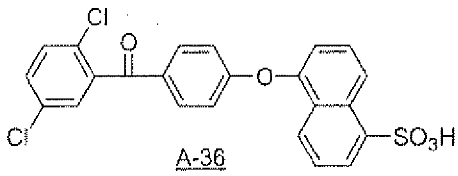

A-36

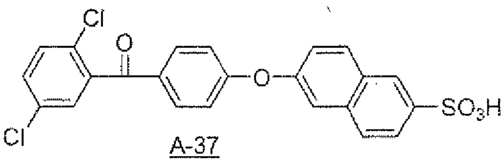

A-37

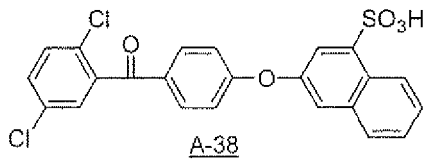

A-38

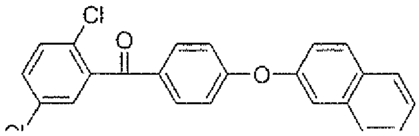

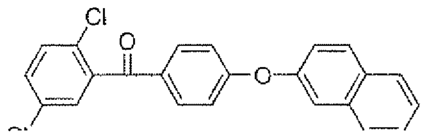

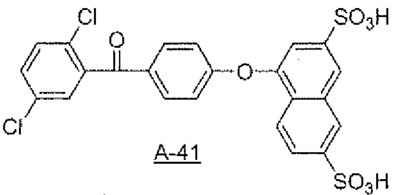

A-41

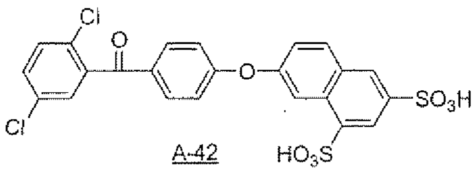

A-42

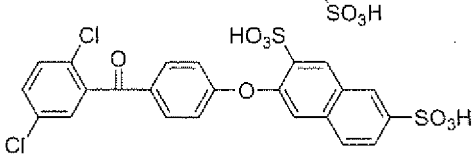

A-43

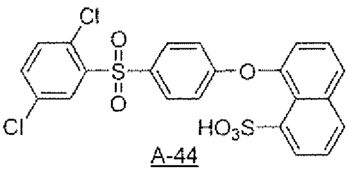
A-44

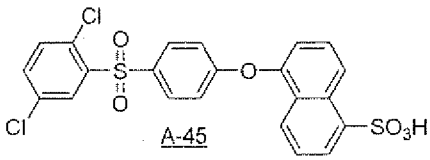
A-45

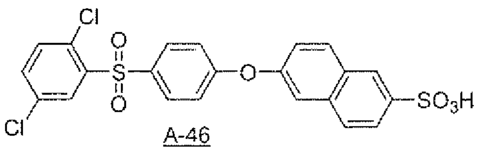
A-46

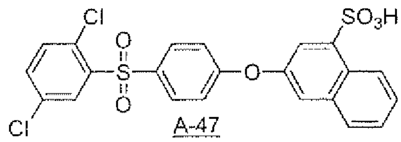
A-47

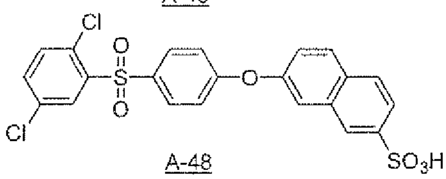
A-48

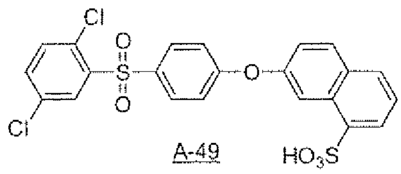
A-49

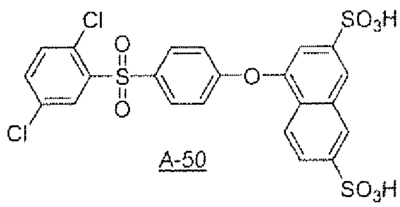
A-50

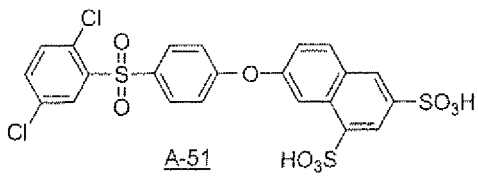
A-51

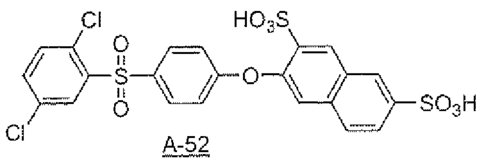
A-52

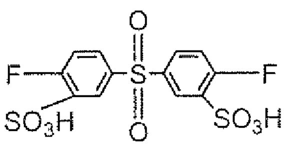
B-1

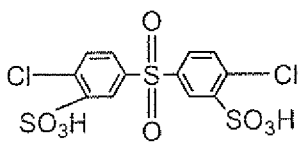
B-2

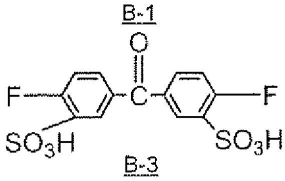
B-3

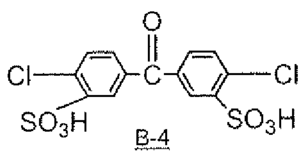
B-4

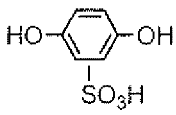
C-1

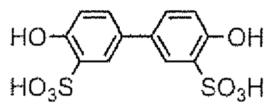
C-2

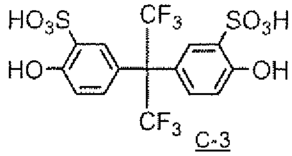
C-3

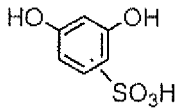
C-4

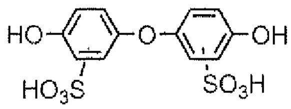
C-5

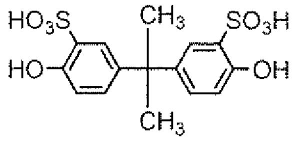
C-6

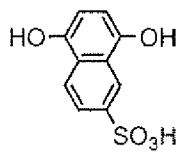
C-7

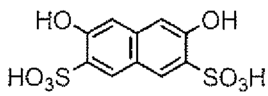
C-8

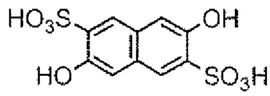
C-9

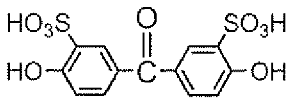
C-10

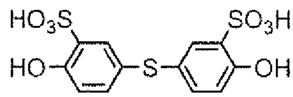
C-11

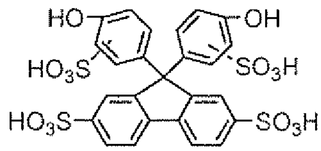
C-12

Among aromatic monomers having an ion exchange group of the above-described general formula (1), preferable are aromatic monomers of the following general formula (1a).

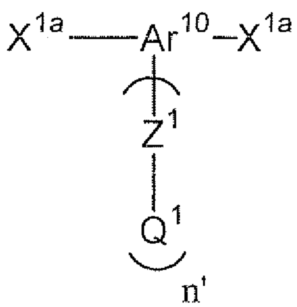
(1a)

In the formula, $X^{1a}$ represents a halogeno group or pseudohalogeno group, and two $X^{1a}$'s may be the same or different. $Ar^{10}$ represents a (2+n')-valent phenylene group, (2+n')-valent biphenylylene group or (2+n')-valent naphthylene group. $Q^1$ represents an ion exchange group, and $Z^1$ represents a direct bond or alkylene group having 1 to 10 carbon atoms containing a group of the above-described (i) to (xii). n' represents 1 or 2, and when n' represents 2, two $Q^1$'s may be the same or different, and two $Z^1$'s may be the same or different.

Among the above-described examples, compounds of the formulae (A-1) to (A-20) correspond to the aromatic monomer of the general formula (1a).

As the monomer having an ion exchange group other than the sulfonic group, compounds obtained by substituting the sulfonic group in the above-described compounds by an ion exchange group such as a carboxyl group, and phosphonic group can be selected. These monomers having an ion exchange group other than the sulfonic group can also be obtained as a commercially available product, or synthesized using conventional production methods.

Further, the ion exchange group of the above-described aromatic monomer having an ion exchange group may form an ester, amide or salt, and particularly it is preferable from the standpoint of polymerization reactivity to use a monomer in which an ion exchange group forms a salt. As the salt form, alkali metal salts are preferable, and particularly,

lithium salt, sodium salt and potassium salt are preferable.

The poly-functional aromatic monomer according to the present invention is a compound of the above-described general formula (2). In the above-described general formula (2), $Ar^2$ represents a (3+p)-valent aromatic group having at least one aromatic ring. As the aromatic ring, a benzene ring or naphthalene ring is preferable. $Ar^2$ may also be one obtained by connection of several aromatic rings via a direct bond, a nitrogen atom, a phosphorus atom, a phosphoryl group, an alkylene group having 1 to 10 carbon atoms or a bond of the above-described formulae (i) to (xii).

$Ar^2$ may be substituted by the same substituent as for $Ar^1$. Particularly, preferable are aromatic monomers in which $Ar^2$ has several aromatic rings, two aromatic rings selected from the several aromatic rings are mutually connected via a connecting group showing flexibility, and these two aromatic rings each having $X^2$. Such a poly-functional aromatic monomer shows easier progress of cross-linking and easier gelling since the reaction activity of $X^2$ is increased due to the flexibility of the connecting group.

The group represented by $X^2$ is a condensable functional group causing a condensation reaction with a functional group $X^1$ in the above-described general formula (1). $X^2$ may also be a functional group causing a condensation reaction with $X^2$ itself, namely, a self condensable functional group. $X^2$ includes preferably leaving functional groups such as halogeno groups (fluoro group, chloro group, bromo group, iodo group and the like), pseudohalogeno groups (4-methylphenylsulfonyloxy group, trifluoromethylsulfonyloxy group, nitro group and the like), and organometal groups; nucleophilic functional groups such as a hydroxyl group, and mercapto group; unsaturated groups such as alkenyl group, and alkynyl group. These condensable functional groups are as described in the column for $X^1$. Among them, $X^2$ represents more preferably a halogeno group, pseudohalogeno group or hydroxyl group, particularly preferably a halogeno group. A plurality of $X^2$'s may be the same or different.

Examples of the compound of the general formula (2) include compounds of the following formulae (D-1) to (D-60) and (E-1) to (E-6).

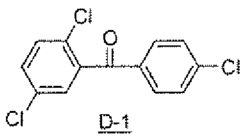
D-1

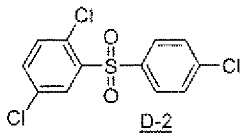
D-2

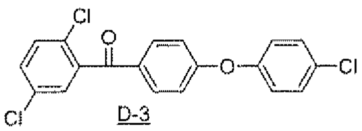
D-3

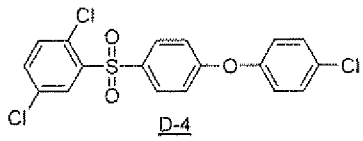
D-4

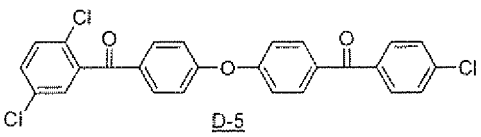
D-5

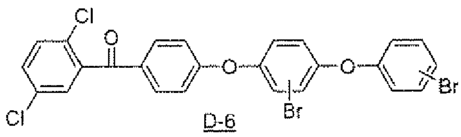
D-6

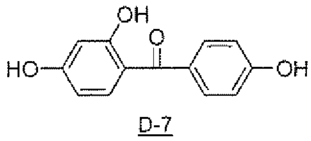
D-7

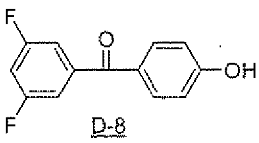
D-8

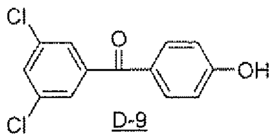
D-9

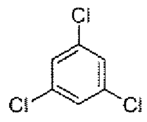
D-10
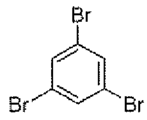
D-11
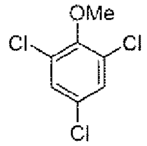
D-12
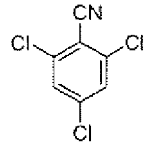
D-13
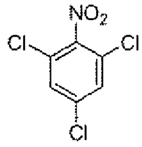
D-14

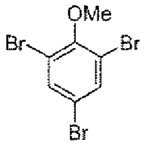
D-15
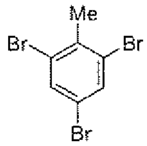
D-16
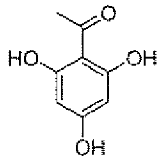
D-17
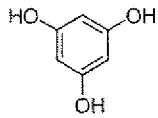
D-18

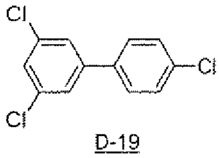
D-19
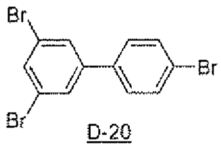
D-20
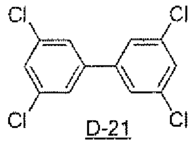
D-21

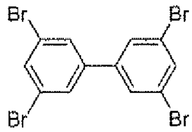
D-22
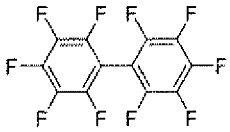
D-23
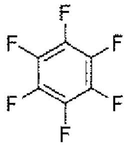
D-24

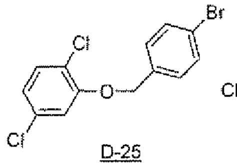
D-25
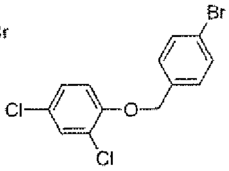
D-26
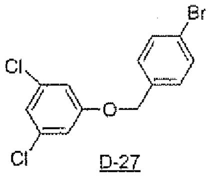
D-27

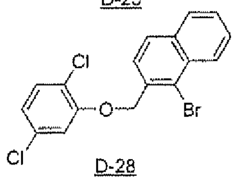
D-28
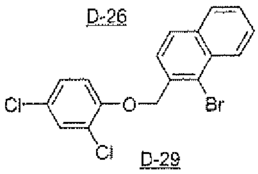
D-29
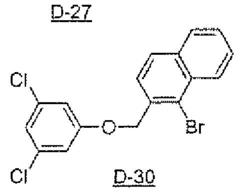
D-30

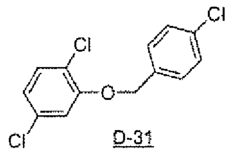
D-31
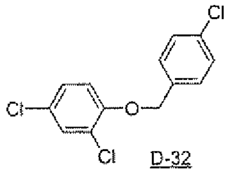
D-32
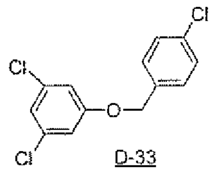
D-33

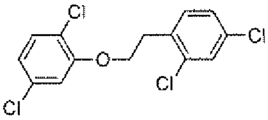
D-34
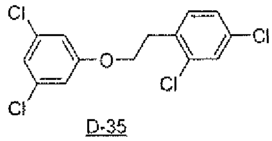
D-35
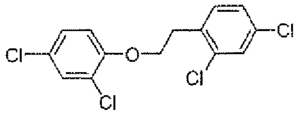
D-36

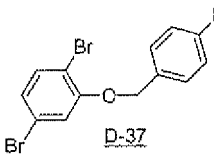
D-37
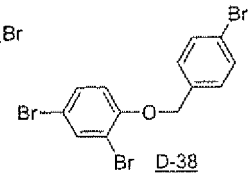
D-38
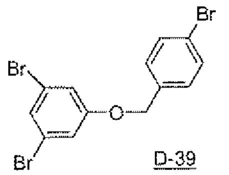
D-39

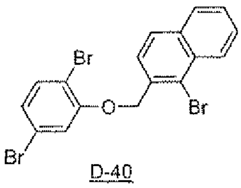
D-40
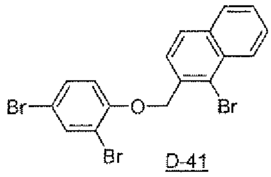
D-41
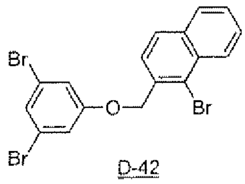
D-42

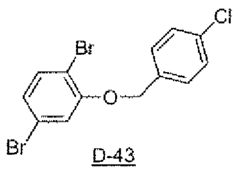
D-43
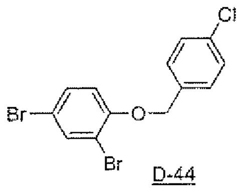
D-44
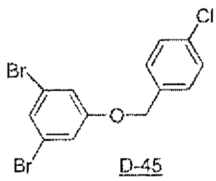
D-45

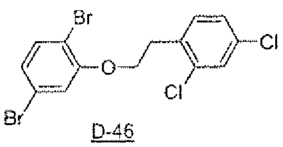
D-46
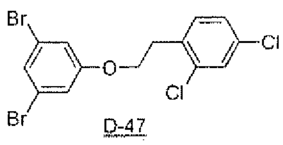
D-47
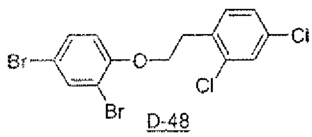
D-48

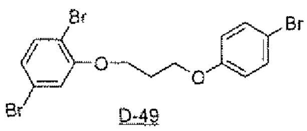
D-49
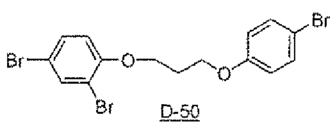
D-50
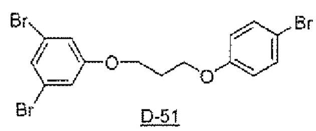
D-51

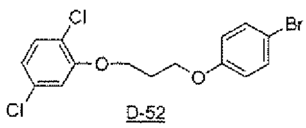
D-52
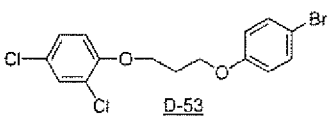
D-53
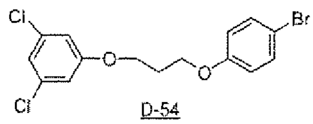
D-54

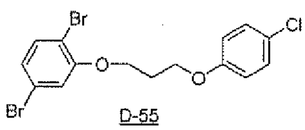
D-55
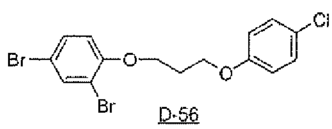
D-56
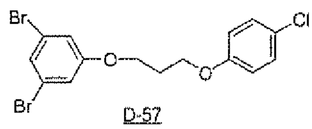
D-57

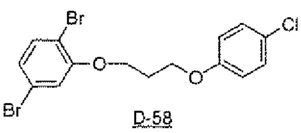
D-58
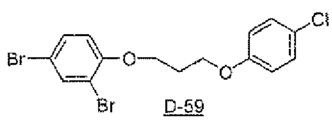
D-59
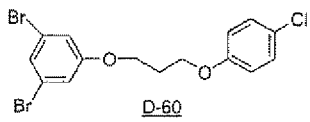
D-60

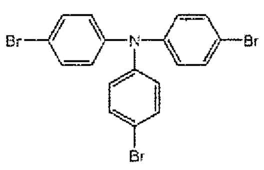
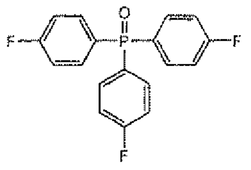
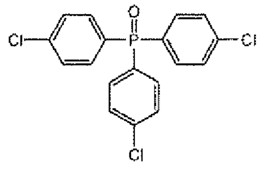
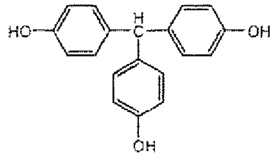

E-1 E-2 E-3 E-4

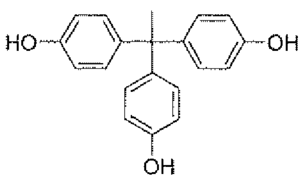
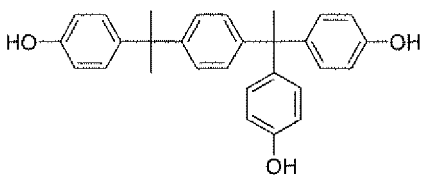

E-5 E-6

The content of the poly-functional aromatic monomer is preferably 0.01 to 50 mole%, more preferably 0.1 to 30 mole%, particularly preferably 1 to 20 mole% with respect to the total amount of the aromatic monomer having an ion exchange group and the poly-functional aromatic monomer. When the content of the poly-functional aromatic monomer is less than 0.01 mole%, cross-linking tends to be insufficient, and when over 50 mole%, control of the reaction tends to be difficult.

The condensation reaction of an aromatic monomer of the general formula (1) and an aromatic monomer of the general formula (2) will be illustrated below in the form of unit reaction between functional groups. That is, if $X^1$ and $X^2$ represent a halogeno group or pseudohalogeno group, or if $X^1$ and $X^2$ represent simultaneously an organometal group, then, aromatic groups, namely, $Ar^1$ and $Ar^1$, $Ar^1$ and $Ar^2$, and/or, $Ar^2$ and $Ar^2$ can be mutually connected by a direct bond according to the Yamamoto coupling reaction. If either one of $X^1$ and $X^2$ is a halogeno group or pseudohalogeno group and another is an organometal group, then, $Ar^1$ and $Ar^2$ can be connected by a direct bond according to a cross-coupling reaction typified by the Suzuki•Miyaura coupling reaction or the Migita•Kosugi•Stille coupling reaction. If either one of $X^1$ and $X^2$ is a halogeno group or pseudohalogeno group and another is an alkynyl group, then, $Ar^1$ and $Ar^2$ can be connected via an alkynyl group according to the Sonogashira coupling reaction. If either one of $X^1$ and $X^2$ is a halogeno group or pseudohalogeno group and another is an alkenyl group, then, $Ar^1$ and $Ar^2$ can be connected via an alkenyl group according to the Heck reaction. Further, if either one of $X^1$ and $X^2$ is a halogeno group and another is a hydroxyl group or mercapto group, then, $Ar^1$ and $Ar^2$ can be connected via an ether bond or thioether bond according to an aromatic nucleophilic substitution reaction. The above descriptions are applied also to the reaction of a condensable functional group in another bi-functional aromatic monomer having no ion exchange group described later and $X^1$ and/or $X^2$.

Examples of particularly suitable poly-functional aromatic monomers include monomers of the following general formula (2a).

$$\left(X^{21}\right)_{b1}Ar^{20}-Y-\left(Z^{2}\right)_{a1}\left(Y-Ar^{21}\right)_{a2}\left(X^{21}\right)_{b2} \qquad (2a)$$

In the formula, $X^{21}$ represents a halogeno group. Y represents a direct bond, oxygen atom, carbonyl group or sulfonyl group, and when there exist a plurality of Y's, these may be the same or different. $Z^2$ represents an alkylene group having 1 to 10 carbon atoms. $Ar^{20}$ and $Ar^{21}$ represent each independently a phenylene group or naphthylene group, and when there exist a plurality of $Ar^{21}$'s, these may be the same or different. a1 represents 0 or 1, a2 represents 1 to 3. b1 and b2 represent an integer of 0 or more, and b1+b2 is 3 or more, and preferably b1+b2 is 3 or 4. A plurality of $X^{21}$'s may be the same or different.

Among the above-described examples, compounds of the formulae (D-1) to (D-6), (D-19) to (D-22), (D-25) to (D-60) correspond to the above-described poly-functional aromatic monomer of the general formula (2a).

In the above-described poly-functional aromatic monomer of the general formula (2a), the halogeno group represented by $X^{21}$ may be any of a chloro group, bromo group or iodo group, and halogeno groups excellent in reactivity correlated with condensability are preferable, and specifically, a chloro group or bromo group is preferable, from the standpoint of significant reduction in the amount of the residual halogeno group in the crosslinked aromatic polymer obtained as described later. As the connecting group for connecting a plurality of aromatic rings in the poly-functional aromatic monomers, groups having flexibility are preferable as described above, therefore, in the above-described general formula (2a), a1 represents preferably 1, and in this case, $Ar^{20}$ and $Ar^{21}$ are connected by an alkylene group represented by $Z^2$, a connecting group having extreme flexibility, as a result, the reactivity of the halogeno group becomes excellent, thus, the amount of the residual halogeno group in the crosslinked aromatic polymer can be further reduced. If at least one of two Y's in $-Y-Z^2-Y-$ as a connecting group between $Ar^{20}$ and $Ar^{21}$ is an oxygen atom or carbonyl group, there occurs a preferable merit that production of the poly-functional aromatic monomer itself is easy. From the standpoint of easiness of production, it is preferable that the carbon number of the alkylene group represented by $Z^2$ is smaller, thus, the carbon number of the alkylene group is preferably 6 or less, further preferably 4 or less. As the aromatic groups $Ar^{20}$ and $Ar^{21}$, aromatic groups having small molecular volume are advantageous, and a phenylene group is preferable, from the standpoint of enhancement of the molecular weight of the crosslinked aromatic polymer thereby attaining easy gelling.

Further, the crosslinked aromatic polymer of the present invention can contain as the aromatic monomer a bi-functional aromatic monomer having no ion exchange group of the above-described general formula (3), for optimizing the ion exchange capacity as one object, as described above, in addition to the aromatic monomer having an ion exchange group and the poly-functional aromatic monomer.

In the general formula (3), $Ar^3$ represents a di-valent aromatic group having several aromatic rings, and preferable as the aromatic ring is a benzene ring or naphthalene ring. $Ar^3$ may also be one obtained by connection of several aromatic rings by a direct bond or via a bond of the above-described formulae (i) to (xii). $Ar^3$ may also be substituted by the same substituents as for $Ar^1$ and $Ar^2$.

The group represented by $X^3$ is a functional group causing a condensation reaction with a functional group $X^1$ in the above-described general formula (1) or a functional group $X^2$ in the above-described general formula (2). $X^3$ includes preferably leaving functional groups such as halogeno groups, pseudohalogeno groups, and organometal groups; nucleophilic functional groups such as a hydroxyl group, and mercapto group; unsaturated groups such as alkenyl groups, and alkynyl groups. These condensable functional groups are as described in the column for $X^1$, and of them, $X^3$ represents more preferably a halogeno group or hydroxyl group, particularly preferably a halogeno group. A plurality of $X^3$'s may be the same or different. Further, $X^3$ may also be a functional group causing a condensation reaction with $X^3$ in another aromatic monomer of the general formula (3), namely, a self-condensable functional group.

Examples of the above-described bi-functional aromatic monomer having no ion exchange group of the general formula (3) include compounds of the following formulae (F-1) to (F-44).

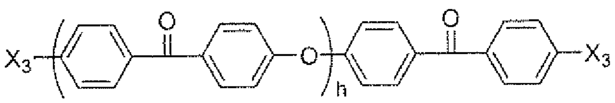

F-1

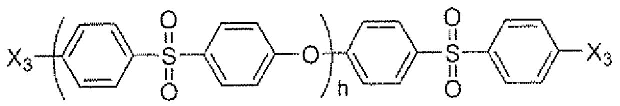

F-2

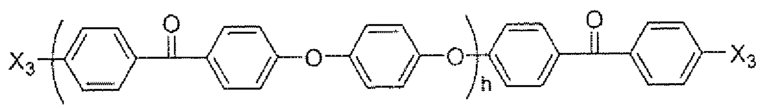

F-3

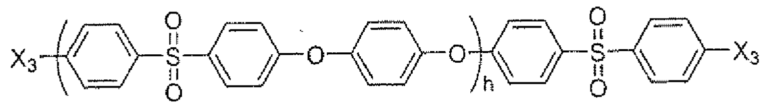

F-4

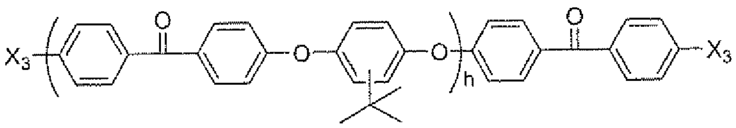

F-5

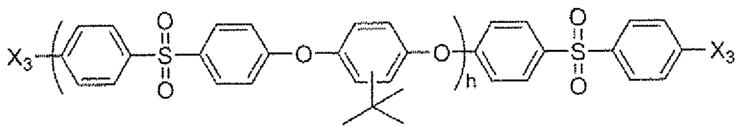

F-6

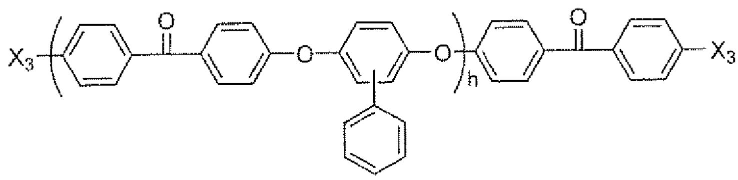

F-7

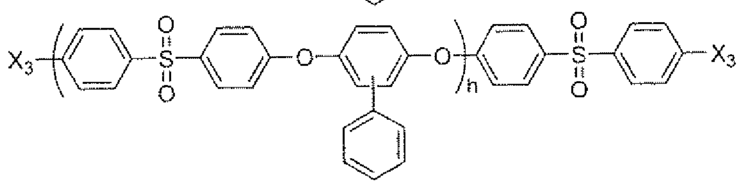

F-8

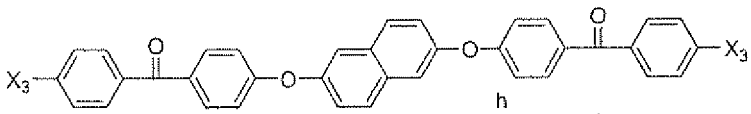

F-9

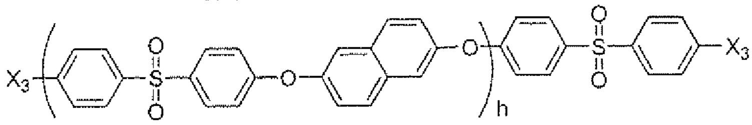

F-10

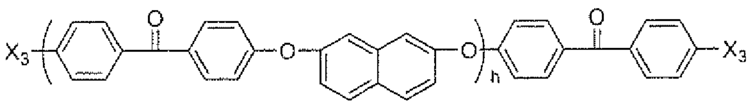

F-11

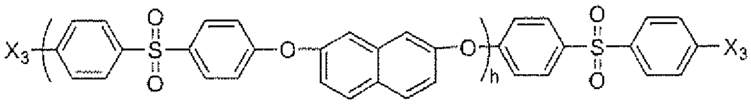

F-12

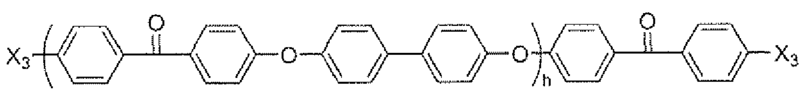

F-13

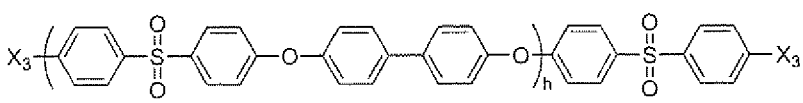

F-14

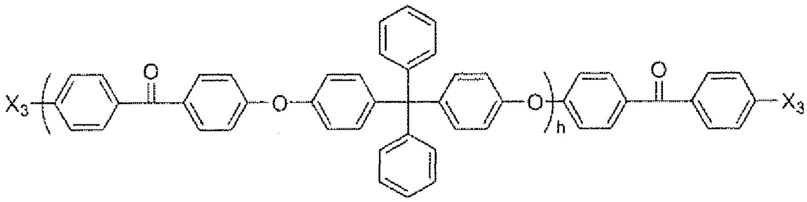

F-15

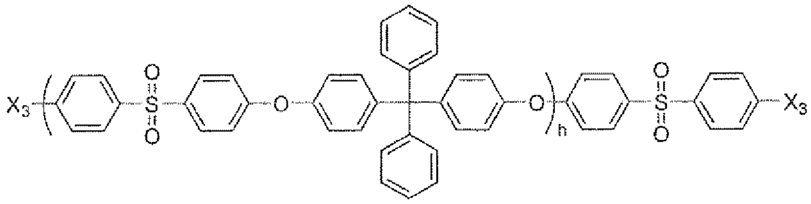

F-16

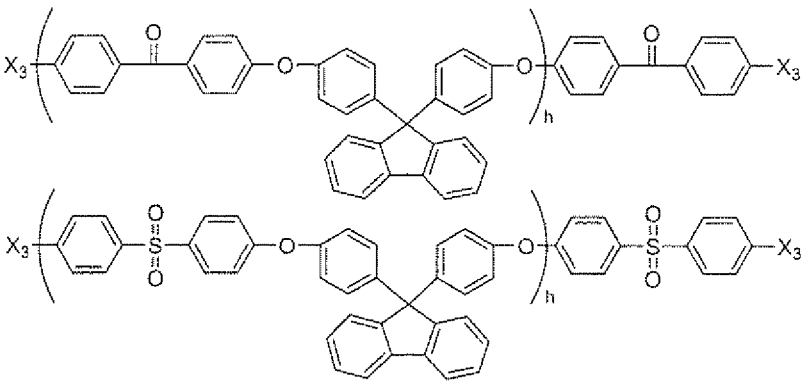

F-17

F-18

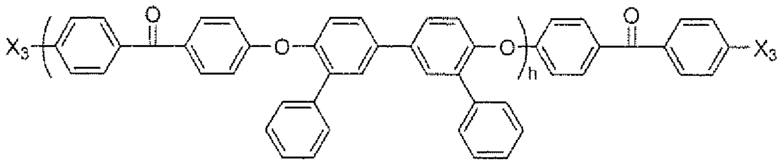

F-19

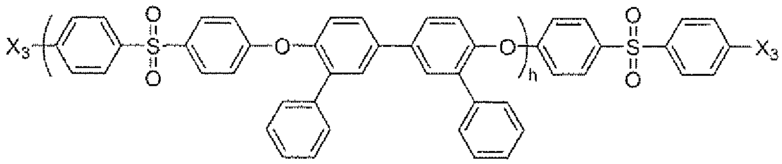

F-20

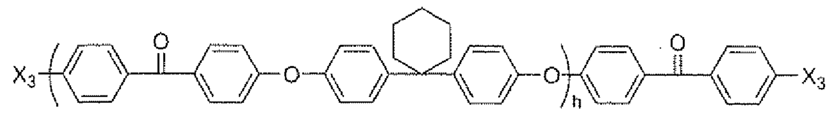
F-21

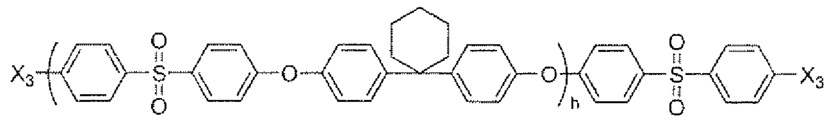
F-22

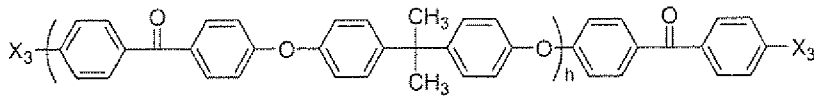
F-23

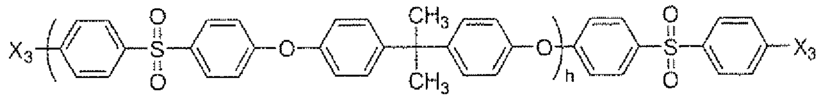
F-24

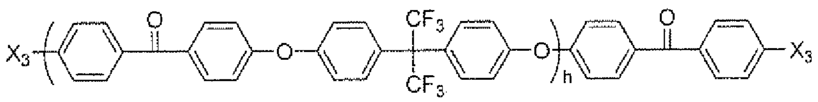
F-25

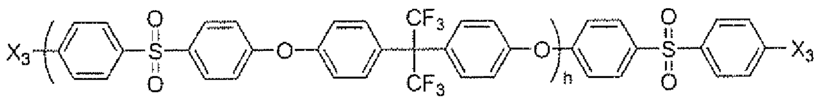
F-26

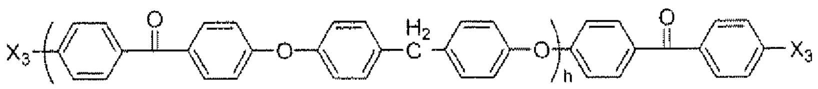
F-27

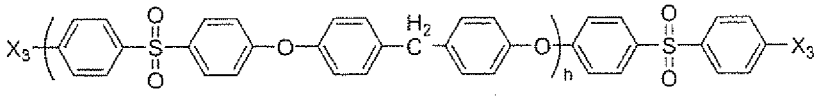
F-28

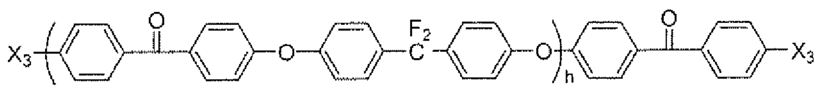
F-29

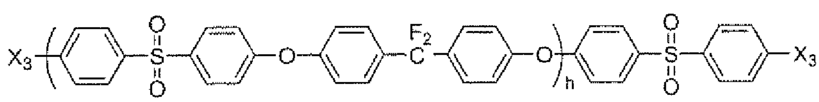
F-30

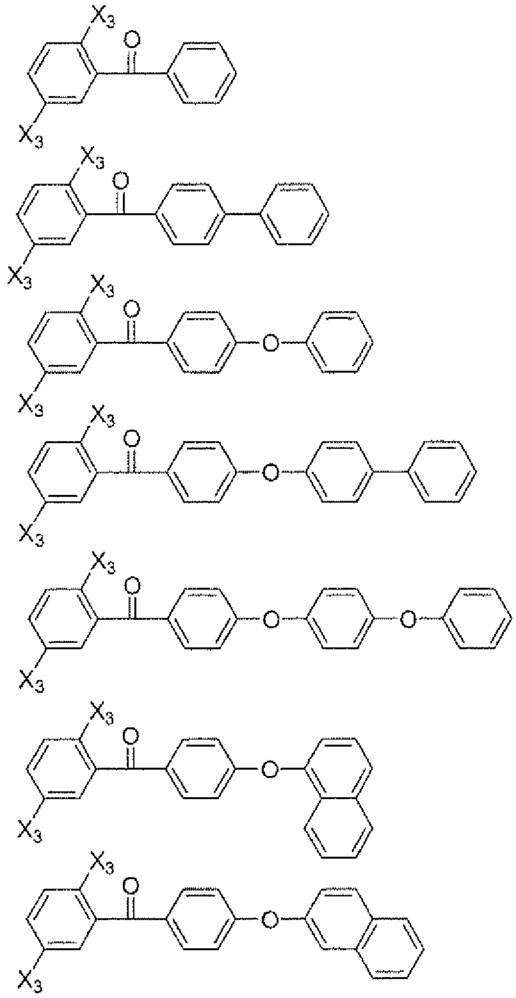

F-31

F-32

F-33

F-34

F-35

F-36

F-37

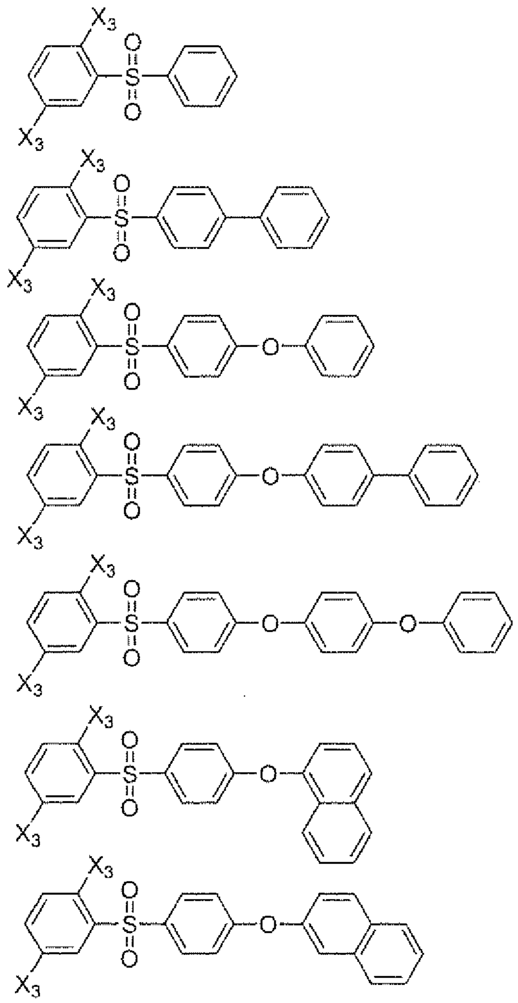

F-38

F-39

F-40

F-41

F-42

F-43

F-44

Here, h represents an integer of 0 or more, preferably an integer of 5 to 200, more preferably 10 to 200. When h is 5 or more, the durability of the resultant crosslinked aromatic polymer tends to be excellent, and when h is 200 or less, the reactivity of the aromatic monomer of the general formula (3) tends to be excellent, thus, a merit of easy copolymerization of the aromatic monomer is obtained in this range. For h being 5 or more, preferably 10 or more, the po 3 ystyrene-reduced number average molecular weight of the above-described bi-functional aromatic monomer having no ion exchange group is preferably 2000 or more, more preferably 3000 or more.

The crosslinked aromatic polymer of the present invention is obtained by polymerizing the above-described compounds of the general formulae (1) and (2) or the above-described compounds of the general formulae (1), (2) and (3), as an aromatic monomer. In polymerizing an aromatic monomer of the general formula (1) as described above and an aromatic monomer of the following general formula (2), it is preferable to use a polymerization method in which aromatic polymers which have not been crosslinked (hereinafter, referred to as "uncrosslinked aromatic polymer") get sufficiently high molecular weight since then also the crosslinked aromatic polymer gets sufficiently high molecular weight, and is gelled easily in the above-described reaction step. Regarding the increase in the molecular weight of the uncrosslinked aromatic polymer, suitable production means will be described later.

$$X^2\text{-}Ar^{30}\text{-}X^2 \qquad (20)$$

In the formulae, $Ar^{30}$ represents a di-valent aromatic group, and indicates an aromatic group obtained by substitution by a hydrogen atom of any $X^2$ other than two $X^2$'s in the functional group connected to $Ar^2$ in the poly-functional aromatic monomer of the general formula (2) applied to production of a crosslinked aromatic polymer. Two $X^2$'s may be the same or different.

In the case of use of an aromatic monomer having as a functional group a nucleophilic group or unsaturated group as $X^1$ or $X^2$, the amount of aromatic monomers (aromatic monomers of the general formulae (1) and (2), or aromatic monomers of the general formulae (1), (2) and (3)) to be used in the above-described reaction step is selected

so that the halogeno group or pseudohalogeno group causing a condensation reaction with these functional groups is present in an amount of 0.95 to 1.05-fold equivalent.

In the polymerization method for generating a gel according to the present invention, it is preferable that all functional groups in the aromatic monomer applied as described above are halogeno groups and the condensation reaction (coupling reaction) thereof is caused by the action of metal atoms, and the action of metal atoms is attained by using a zero-valent transition metal complex. As another suitable embodiment, there is a condensation reaction occurring in the nucleophilic substitution fashion in the presence of a base.

The condensation reaction as a suitable polymerization reaction will be illustrated in detail below. In the case of the condensation reaction in the presence of a zero-valent transition metal complex, it is preferable that the functional group in the aromatic monomer to be used is a chloro group or bromo group among halogeno groups, and it is possible that the aromatic monomer, zero-valent transition metal complex and solvent are mixed, water in the system is removed, and the reaction is carried out under an inert atmosphere.

The zero-valent transition metal complex is a compound in which halogen atoms and ligands described later are coordinated on a transition metal, and preferable are those having at least one of ligands described later. The transition metal complex can be obtained as a commercially available product or synthesized by conventional methods.

Examples of the synthesis method of the transition metal complex include conventional methods such as methods of reacting a transition metal salt or transition metal oxide and a ligand, and the like. The synthesized transition metal complex may be isolated before use, or may be used in situ without isolation.

Examples of the ligand include acetate, acetylacetonate, 2,2'-bipyridyl, 1,10-phenanthroline, methylenebisoxazoline, N,N,N'N'-tetramethylethylenediamine, triphenylphosphine, tritolylphosphine, tributylphosphine, triphenoxyphosphine, 1,2-bisdiphenylphosphinoethane, and 1,3-bisdiphenylphosphinopropane.

Examples of the transition metal complex include a nickel complex, palladium complex, platinum complex, and copper complex. Of these transition metal complexes, a zero-valent nickel complex and a zero-valent palladium complex are preferably used, and a zero-valent nickel complex is more preferable.

Examples of the zero-valent nickel complex include bis(1,5-cyclooctadiene)nickel(0) (hereinafter, described as "Ni(cod)$_2$"), (ethylene)bis(triphenylphosphine)nickel(0), tetrakis(triphenylphosphine)nickel, and among them, Ni(cod)$_2$ is preferably used from the standpoint of cheapness. Examples of the zero-valent palladium complex include tetrakis (triphenylphosphine)palladium(0).

Examples of the synthesis method of the zero-valent transition metal complex include methods by which a transition metal compound is reduced to zero-valent with a reducing agent such as zinc, and magnesium. The synthesized zero-valent transition metal complex may be isolated before use, or may be used in situ without isolation.

In the case of generation of a zero-valent transition metal complex from a transition metal compound with a reducing agent, di-valent transition metal compounds are usually used as the transition metal compound to be used, however, also zero-valent compounds can be used. Particularly, di-valent nickel compounds and di-valent palladium compounds are preferable. The di-valent nickel compounds include nickel chloride, nickel bromide, nickel iodide, nickel acetate, nickel acetylacetonate, nickel chloride bis(triphenylphosphine), nickel bromide bis(triphenylphosphine), nickel iodide bis(triphenylphosphine). The di-valent palladium compounds include palladium chloride, palladium bromide, palladium iodide, and palladium acetate.

The reducing agent includes zinc, magnesium, sodium hydride, hydrazine and derivatives thereof, lithium aluminum hydride. If necessary, ammonium iodide, trimethylammonium iodide, triethylammonium iodide, lithium iodide, sodium iodide, potassium iodide and the like can also be used together.

In the condensation reaction using the above-described transition metal complex, it is preferable to add a compound which can act as a ligand of the transition metal complex used from the standpoint of improvement in the yield of the polymer. The compound to be added may be the same as or different from the ligand of the transition metal complex used.

The above-described compound which can act as a ligand is the same compounds as the ligands described above. Triphenylphosphine and 2,2' -bipyridyl are preferable from the standpoint of general versatility, cheapness, reactivity of a condensation agent, yield of a polymer, increase in the molecular weight of a polymer. Particularly, if 2, 2' -bipyridyl is combined with Ni (cod)$_2$, the yield of a polymer is improved and the molecular weight of a polymer is increased, thus, this combination is preferably used. The addition amount of the ligand is 0.2 to 10 mol, preferably 1 to 5 mol with respect to 1 mol of a transition metal atom in a zero-valent transition metal complex.

The amount of a zero-valent transition metal complex is 0.1-fold mol or more, preferably 1.5-fold mol or more, more preferably 1. 8-fold mol or more, still more preferably 2.1-fold mol or more with respect to 1 mol of the sum of aromatic monomers to be used. When the amount is less than 0.1-fold mol, gelling does not progress easily, in some cases. Though the upper limit of the amount of a zero-valent transition metal complex is not particularly restricted, it is preferably 5.0-fold mol or less since when the amount thereof is too large, the post treatment tends to be complicated.

In the case of synthesis of a zero-valent transition metal complex from the transition metal compound using a reducing agent, the generating zero-valent transition metal complex may be advantageously regulated within the above-described range, and for example, the amount of the transition metal compound may advantageously be 0.01-fold mol or more, preferably 0.03-fold mol or more with respect to 1 mol of the sum of aromatic monomers to be used. Though the upper limit of the amount is not particularly restricted, it is preferably 5.0-fold mol or less since when the amount thereof is too large, the post treatment tends to be complicated.

The amount of the reducing agent may advantageously be, for example, 0.5-fold mol or more, preferably 1.0-mold mol or more with respect to 1 mol of the sum of aromatic monomers to be used. Though the upper limit of the amount is not particularly restricted, it is preferably 10-mold mol or less since when the amount thereof is too large, the post treatment tends to be complicated.

In the method of a condensation reaction in the presence of a zero-valent transition metal complex, the reaction temperature is usually preferably 0 to 250°C. For further increasing the molecular weight of the crosslinked aromatic polymer to be generated, it is preferable that a zero-valent transition metal complex and the above-described monomer are mixed at temperatures of 45°C or higher. The preferable mixing temperature is usually 45°C to 200°C, more preferably 50°C to 100°C. After mixing of a zero-valent transition metal complex and the monomer, the reaction thereof is carried out at 45°C to 200°C, more preferably 50°C to 100°C. The reaction time in this procedure is 30 seconds to 24 hours.

The above-described reaction is usually carried out in a solvent. Examples of the solvent include aprotic polar solvents such as N,N-dimethylformamide (hereinafter, described as "DMF"), N,N-dimethylacetamide (hereinafter, described as "DMAc"), N-methyl-2-pyrrolidone (hereinafter, described above "NMP"), dimethyl sulfoxide (hereinafter, described as "DMSO"), and hexamethylphosphoric triamide; aromatic hydrocarbon solvents such as toluene, xylene, mesitylene, benzene, and n-butylbenzene; ether solvents such as tetrahydrofuran, 1,4-dioxane, dibutyl ether, tert-butyl methyl ether, and diphenyl ether; ester solvents such as ethyl acetate, butyl acetate, and methyl benzoate; halogenated alkyl solvents such as chloroform, and dichloroethane.

For obtaining a crosslinked aromatic polymer having higher molecular weight, it is preferable that the aromatic monomer to be used and the oligomer before gelling are dissolved in a solvent. Therefore, preferable are tetrahydrofuran, 1,4-dioxane, DMF, DMAc, NMP, DMSO, toluene and the like which are good solvents for these compounds. These can be used in admixture of two or more. Of them, DMF, DMAc, NMP, DMSO and mixed solvents composed of two or more of them are preferable.

Though the solvent amount is not particularly restricted, the solvent amount is preferably 50 to 99.95 wt%, more preferably 75 to 99.9 wt% with respect to 100 wt% of the sum of the aromatic monomers and solvent to be used in polymerization. When the solvent amount is over 99. 95 wt%, the monomer concentration lowers, thus, generation of a gel tends to be difficult, and when less than 50 wt%, the monomer concentration increases, thus, control of the polymerization reaction tends to be difficult.

In contrast, the method of condensing a halogen atom and a hydroxyl group in nucleophilic substitution fashion under the action of a base will be described simply. In this reaction, the above-described aromatic monomer, basic compound and solvent are mixed, and the reaction can be carried out while removing water by-produced in the initial stage of the condensation reaction or during the condensation reaction. As the means for removal of water, there can be used a means of adding a solvent showing azeotropy with water to the reaction system and azeotropically removing water, and a means of placing a water absorbing agent such as molecular sieve into the reaction system and removing water.

As the solvent to be used in the above-described reaction, there can be used ether solvents such as diethyl ether, dibutyl ether, diphenyl ether, tetrahydrofuran, dioxane, dioxolane, ethylene glycol monomethyl ether, ethylene glycol monoethyl ether, propylene glycol monomethyl ether, and propylene glycol monoethyl ether; ketone solvents such as acetone, methyl isobutyl ketone, methyl ethyl ketone, and benzophenone; halogen-based solvents such as chloroform, dichloromethane, 1,2-dichloroethane, 1,1,2,2-tetrachloroethane, chlorobenzene, and dichlorobenzene; amide solvents such as N,N-dimethylacetamide, N-methylacetamide, N,N-dimethylformamide, N-methylformamide, formamide, and N-methyl-2-pyrrolidone; esters such as methyl formate, methyl acetate, and $\gamma$-butyrolactone; nitriles such as acetonitrile, and butyronitrile; dimethyl sulfoxide, diphenyl sulfone, and sulfolane. Of them, preferable are mixed solvents composed of an amide solvent or dimethyl sulfoxide, and toluene or xylene which shows azeotropy with water. The solvents may be used singly or in combination with another or more.

The amount of the solvent is 1 to 200 parts by weight, preferably 2 to 100 parts by weight with respect to 100 parts by weight of the sum of aromatic monomers to be used.

The above-described basic compound is sodium hydroxide, potassium hydroxide, sodium carbonate, potassium carbonate, sodium hydrogen carbonate or potassium hydrogen carbonate. Two or more basic compounds can also be used in admixture. Of them, potassium carbonate, sodium carbonate or sodium hydroxide is preferable. The amount of the basic compound is 0.9 to 10.0-fold mol, preferably 1.0 to 3.0-fold mol with respect to 1 mol of the sum of hydrophilic groups in the aromatic monomer.

The halogeno groups in the above-described reaction are present in an amount of preferably 0.95 to 1.05-fold mol, more preferably 0.98 to 1.02-fold mol, further preferably 0.99 to 1.01-fold mol with respect to 1 mol of the sum of hydrophilic groups.

The reaction temperature is preferably 20 to 300°C, further preferably 50 to 250°C. The reaction time is preferably 0.5 to 500 hours, further preferably 1 to 100 hours.

Though the reaction may be carried out under increased pressure or reduced pressure, it is preferable to carry out the reaction at normal pressure (about 1 atm) because of simplicity of facility.

Subsequently, the means for generating a gel in the above-described reaction step will be described in detail when all of condensable functional groups $X^1$ and $X^2$ are halogeno groups in the aromatic monomer having an ion exchange group of the general formula (1) and the poly-functional aromatic monomer of the general formula (2).

As described above, in mutual condensation of halogeno groups, the reaction can be carried out using a zero-valent transition metal complex as a catalyst. Particularly, methods of using a nickel complex, palladium complex or copper complex as the transition metal complex are preferable, and methods of using a nickel complex are particularly preferable. Among methods using a nickel complex, the case of using an aromatic monomer in which an ion exchange group forms a salt as described above includes production methods in which a nickel complex is used as described below, as described in JP-A No. 2005-248143 and JP-A No. 2005-320523. Specifically, when an aromatic monomer of the general formula (1) and an aromatic monomer of the general formula (2) are condensed at a temperature of 45°C or higher in the presence of a zero-valent nickel complex and a ligand, the resultant polymer easily gets higher molecular weight, and consequently, a gel is easily generated (see, JP-A No. 2005-248143, paragraphs 0026 to 0033, JP-A No. 2005-320523, paragraphs 0027 to 0036). The case of using an aromatic monomer having a protected ion exchange group (for example, sulfonate group, sulfonic amide group) includes production methods in which a nickel complex is used as described below, as described in JP-A No. 2007-270118 and JP-A No. 2007-284653. Specifically, when an aromatic monomer of the general formula (1) and an aromatic monomer of the general formula (2) are condensed in the presence of a nickel compound such as nickel chloride and a nitrogen-containing bidentate ligand such as 2,2'-bipyridine, the resultant polymer easily gets higher molecular weight, and consequently, a gel is easily generated (see, JP-A No. 2007-270118, paragraphs 0063 to 0069 and examples (Example 4, Examples 6 to 14), see JP-A No. 2007-284653, paragraphs 0059 to 0065 and examples (Examples 7 to 20)). If a crosslinked polymer is produced according to production methods described in such publications, the crosslinked polymer gets sufficiently higher molecular weight, thus, it becomes easy to generate a gel in the above-described reaction step. When the ion exchange group forms a sulfonate, the sulfonate group can be converted into a sulfonic group by hydrolysis as described in JP-A No. 2007-284653. In the case of use of the above-described aromatic monomer of the general formula (3) together, "aromatic monomer of the general formula (1) and aromatic monomer of the general formula (2)" may be replaced by "aromatic monomer of the general formula (1), aromatic monomer of the general formula (2) and aromatic monomer of the general formula (3)" in production methods using a nickel complex described in these publications and the condensation reaction may be carried out.

It is preferable for generation of a gel to perform the reaction so that the amount of halogeno groups remaining without reacting with the generating crosslinked aromatic polymer is smaller. When the halogeno group is a suitable chloro group or bromo group, the total amount of the residual chloro groups and the residual bromo groups in the crosslinked aromatic polymer is preferably 3 wt% or less, more preferably 1 wt% or less, particularly preferably 0.3 wt% or less. In this way, if the amount of the residual halogeno groups in the crosslinked aromatic polymer is small, there is also a merit that discharge of hydrogen halides can be suppressed remarkably when the electrolyte is used in a fuel cell.

For sufficiently causing a mutual condensation reaction of halogeno groups and preventing residual presence of halogeno groups in the crosslinked aromatic polymer, it is preferable that $Ni(cod)_2$ is used as the catalyst and the amount of this catalyst is 0.1 to 5.0 mol with respect to 1 mol of the sum of aromatic monomers. When the catalyst amount is in this range, halogeno groups are mutually condensed sufficiently to generate a direct bond between aromatic groups, and side reactions such as substitution of a halogeno group in an aromatic monomer by a hydrogen atom can be suppressed sufficiently. The crosslinked aromatic polymer obtained by a method in which the amount of the residual halogeno groups is smaller has sufficiently high molecular weight, thus, it is easy to generate a gel in the above-described reaction step.

For quantification of the residual halogeno groups, particularly the residual chloro groups and residual bromo groups, in the crosslinked aromatic polymer, the crosslinked aromatic polymer is burning-treated, and the volatilized hydrogen halide gas (hydrochloric acid gas, hydrogen bromide gas) is brought into contact with an absorption solution to recover hydrogen halides into the absorption solution, according to Japanese Pharmacopoeia Fifteenth Edition, General Tests, Oxygen Flask Combustion Method. The absorption solution thus absorbed hydrogen halides is measured by ion chromatography for quantification.

As described the above, for obtaining a crosslinked aromatic polymer having higher molecular weight, it is preferable that the aromatic monomer to be used and the oligomer before gelling are dissolved in a solvent. For example, when an aromatic polymer which has not been crosslinked (hereinafter, referred to as "uncrosslinked aromatic polymer") is obtained from an aromatic monomer of the following general formula (21), in addition to the aromatic monomer of the general formula (1) to be used in the present invention, preferable solvents are capable of dissolving the uncrosslinked aromatic polymer at 25°C in an amount of 5 parts by weight with respect to 100 parts by weight of the solvent.

$X^2$-$Ar^{20}$-$X^2$ (21)

$Ar^{30}$ has the same definition as in the above-described general formula (20), and $X^{21}$ has the same definition as in the above-described general formula (2a). Two $X^{21}$ may be the same or different. In the case of use of the above-described monomer of the general formula (1a) suitable as the aromatic monomer of the general formula (1), the suitable solvents include NMP, DMF, DMAc, DMSO and mixed solvents thereof. By use of such reaction solvents, it becomes easy to generate a gel by sufficiently preventing generation of a precipitate and the like of the aromatic polymer generated in the condensation reaction without gelling and separation thereof from the reaction system.

Further, for obtaining a crosslinked aromatic polymer having higher molecular weight, it is preferable to reduce water in the reaction system. As the means for removal of water, there can be used a means of adding a solvent showing azeotropy with water to the reaction system and azeotropically removing water, and a means of allowing a water absorbing agent such as molecular sieve to coexist in the above-described reaction step.

The crosslinked aromatic polymer obtained by the above-described methods is a gel swollen with a solvent. For removal of the crosslinked aromatic polymer from a reaction solution, the solvent in the gel is substituted by water to obtain a water absorbed gel, and the water absorbed gel is dispersed in a dispersion medium to give a dispersion to be removed in this condition. Further, the gel swollen with a solvent can be put into a poor solvent and washed sufficiently, thereby obtaining a solid substance from which the solvent has been removed (crosslinked aromatic polymer) to be isolated in this condition. In this case, if necessary, the isolated crosslinked aromatic polymer can also be dispersed in a dispersion medium to give a dispersion. In the process of dispersing the crosslinked aromatic polymer in a dispersion medium, the crosslinked aromatic polymer absorbs the dispersion medium to be gelled in some cases, and the polymer electrolyte dispersed solution of the present invention may also be used in such a dispersed state.

Methods of removal of the crosslinked aromatic polymer include, but not limited to, one suitable example using a poor solvent described above. Here, the poor solvent is a solvent in which the resultant crosslinked aromatic polymer is insoluble, or with which the resultant crosslinked aromatic polymer is scarcely swollen. Specifically, when the uncrosslinked aromatic polymer as described above is obtained, the dissolution amount of the uncrosslinked aromatic polymer at 25°C is 5 parts by weight or less with respect to 100 parts by weight of the solvent.

When the ion exchange group of the resultant crosslinked aromatic polymer is in the form of salt, it is preferable that a sulfonic group is converted into the form of free acid, for use thereof as a member of a fuel cell. Conversion into a free acid is usually possible by washing with an acidic solution. Examples of the acid to be used include hydrochloric acid, sulfuric acid and nitric acid.

In the crosslinked aromatic polymer of the present invention, the equivalent number of ion exchange groups per 1 g of the crosslinked aromatic polymer, namely, the ion exchange capacity thereof is preferably 0.5 to 10.0 meq/g, and particularly preferably 2.0 to 7.0 meq/g. When the ion exchange capacity is less than 0.5 meq/g, proton conductivity is insufficient when used as a polymer electrolyte, and when over 10.0 meq/g, water resistance tends to lower. When the ion exchange capacity is within the above-described range, proton conductivity and water resistance are sufficiently excellent in the case of use of the crosslinked aromatic polymer of the present invention as a polymer electrolyte or polymer electrolyte membrane for a fuel cell. The ion exchange capacity can be regulated arbitrarily by changing the kind of a monomer and the molar ratio of monomers.

For generating a gel in the above-described reaction step, the lower limit of the ion exchange capacity of the resultant crosslinked aromatic polymer is preferably 2.0 meq/g or more, more preferably 2.5 meq/g or more, and particularly preferably 3.0 meq/g or more. The upper limit of the ion exchange capacity is preferably 7.0 meq/g or less, more preferably 6.5 meq/g or less, and particularly preferably 6.0 meq/g or less. Since NMP, DMF, DMAc and DMSO which are suitable reaction solvents described above are relatively rich in hydrophilicity, when the resultant crosslinked aromatic polymer has relatively high ion exchange capacity as described above, affinity between the reaction solvent and polymer is excellent, giving a tendency of easy generation of a gel in the reaction step.

Thus obtained crosslinked aromatic polymer satisfies simultaneously high water retention property and water resistance which cannot be realized by conventional crosslinked aromatic polymers, further, is capable of showing sufficiently high proton conductivity even under low humidity conditions because of the presence of an ion exchange group, thus, can be used as a polymer electrolyte.

(Polymer electrolyte dispersed solution)

The polymer electrolyte dispersed solution obtained by dispersing a crosslinked aromatic polymer of the present invention in a dispersion medium will be described.

The polymer electrolyte dispersed solution of the present invention is produced by a process comprising a reaction step of reacting the above-described aromatic monomer having an ion exchange group of the general formula (1) and the above-described poly-functional aromatic monomer of the general formula (2) in a solvent, thereby generating

a gel swollen with the solvent, a solvent substitution step of substituting the solvent in the gel with water, thereby obtaining a water-absorbed gel, and a dispersion step of dispersing the above-described water-absorbed gel in a dispersion medium. This water-absorbed gel preferably has a water absorption magnification ratio of 10-fold or more.

Further, the polymer electrolyte dispersed solution of the present invention is produced by a process comprising a reaction step of reacting the above-described aromatic monomer having an ion exchange group of the general formula (1) and the above-described poly-functional aromatic monomer of the general formula (2) in a solvent, thereby generating a gel swollen with the solvent, a solvent removal step of removing the solvent from the above-described gel, and a dispersion step of dispersing the substance obtained in the solvent removal step with a dispersion medium.

Though the form of the crosslinked aromatic polymer in the polymer electrolyte dispersed solution is not particularly restricted, block, granule, fiber or membrane is preferable. As the dispersion method in the above-described dispersion step, preferable are methods of dispersing a water-absorbed gel in a dispersion medium using a mixer, ultrasonic dispersion apparatus, homogenizer, or ball mill. In the dispersion methods, any one of apparatuses may be used, or two or more apparatuses may be used in combination. Particularly, a method of dispersing a gel in a dispersion medium by a mixer, then, further dispersing this finely by a homogenizer is preferable from the standpoint of obtaining a dispersion easily and stably. In the polymer electrolyte dispersed solution of the present invention, it is more preferable that the above-described dispersion medium contains water.

As the dispersion medium in carrying out dispersion, water, alcohol solvent or water-alcohol mixed solvent is preferable, and as the alcohol solvent, methanol, ethanol, isopropanol and butanol are particularly preferable. A solvent may be optionally added to thus prepared dispersion or may be distilled off, to adjust the dispersion concentration. As the solvent to be added, there can be used water, aprotic polar solvents such as N,N-dimethylformamide, N,N-dimethylacetamide, N-methyl-2-pyrrolidone, and dimethyl sulfoxide, alcohols such as methanol, ethanol, and propanol, alkylene glycol monoalkyl ether solvents such as ethylene glycol monomethyl ether, ethylene glycol monoethyl ether, propylene glycol monomethyl ether, and propylene glycol monoethyl ether, or chlorine-containing solvents such as dichloromethane, chloroform, 1,2-dichloroethane, chlorobenzene, and dichlorobenzene. These can be used singly or in combination with another or more. In the polymer electrolyte dispersed solution of the present invention, it is preferable that the dispersion medium contains water since then environmental loads in treating waste liquid are decreased as described above. Further, other solvents may be optionally added to water, and solvents showing easy miscibility with water are selected, and alcohol solvents are preferable. Further, in the process of obtaining the polymer electrolyte dispersed solution, the amount of water or alcohol solvent added if necessary can be appropriately set to adjust the concentration of the dispersion, and the dispersion medium can be distilled off from the dispersion to concentrate the dispersion.

In the above-described polymer electrolyte dispersed solution, the content of the crosslinked aromatic polymer is not particularly restricted, and it is usually 0.001 to 30 wt%, preferably 0.005 to 20 wt%, particularly preferably 0.01 to 10 wt%. The polymer electrolyte dispersed solution may be prepared with heating, and as the heating conditions, temperatures of 20°C to 200°C under normal pressure are preferable. It may also be heated in a range of 20°C to 300°C in a pressure-resistant vessel such as autoclave.

Thus obtained polymer electrolyte dispersed solution can be mixed with a catalyst substance to prepare a catalyst ink which is used for forming a fuel cell catalyst layer or polymer electrolyte membrane.

(Fuel cell)

A fuel cell using the polymer electrolyte containing the crosslinked aromatic polymer of the present invention will be described.

Fig. 1 is a view schematically showing the cross-sectional constitution of a fuel cell according to a suitable embodiment. As shown in Fig. 1, on both sides of a polymer electrolyte membrane 12 (proton conductive membrane) of a fuel cell 10, catalyst layers 14a, 14b, gas diffusion layers 16a, 16b and separators 18a, 18b are formed in this order sandwiching the membrane 12. The polymer electrolyte membrane 12 and a pair of catalyst layers 14a, 14b sandwiching this constitute a membrane-electrode assembly (hereinafter, abbreviated as "MEA").

The polymer electrolyte membrane 12 is constituted of a polymer electrolyte containing a crosslinked aromatic polymer of the present invention.

The polymer electrolyte membrane 12 can be obtained by processing a polymer electrolyte into a film. Examples of the processing method include a method of membrane formation from a solution containing a polymer electrolyte (solution cast method), and specifically include a method in which a crosslinked aromatic polymer of the present invention is dispersed with a suitable solvent to prepare a dispersion, this dispersion is cast-applied on a glass plate, and the solvent is removed to form a membrane, or a method in which the above-described polymer electrolyte dispersed solution is cast-applied on a glass plate, and the dispersion medium is removed to form a membrane. If the crosslinked aromatic polymer in the dispersion is gelled with a dispersion medium, membrane formation itself tends to become easy. For the polymer electrolyte membrane 12 of the present invention, a method of membrane formation from a polymer electrolyte dispersed solution is preferable.

Though the thickness of a film constituting the polymer electrolyte membrane 12 is not particularly restricted, it is preferably 10 to 300 μm, and more preferably 20 to 100 μm. When this thickness is smaller than 10 μm, practical strength as the polymer electrolyte membrane 12 is not obtained sufficiently in some cases, and when larger than 300 μm, the membrane resistance increases and the property of the fuel cell 10 tends to lower. This membrane thickness can be controlled by the concentration of the polymer electrolyte dispersed solution and the coated thickness on a substrate.

The polymer electrolyte constituting the polymer electrolyte membrane 12 may contain, if necessary, plasticizers, stabilizers, releasing agents and the like which are used in usual polymers, in addition to the crosslinked aromatic polymer of the present invention. In the application of a fuel cell, inorganic or organic fine particles may also be added as a water retention agent, for rendering management of water content easier. Further, the polymer electrolyte membrane 12 may also be a composite alloy composed of the above-described crosslinked aromatic polymer and other polymer, obtained by mixed co-cast and the like. These components other than the above-described crosslinked aromatic polymer can be used in a range not lowering the properties of the polymer electrolyte membrane 12 (proton conductivity and the like).

The polymer electrolyte membrane 12 may be further crosslinked by irradiation with electron beam, radiation and the like for the purpose of improving mechanical strength and the like, after the above-described membrane formation. The polymer electrolyte membrane 12 may also be a composite membrane obtained by impregnating a polymer electrolyte into a porous substrate, or a membrane reinforced by mixing with a fiber or pulp, in addition to the membrane formed from a polymer electrolyte as described above.

That is, the above-described polymer electrolyte membrane 12 can also be a polymer electrolyte composite membrane composed of a porous substrate having a polymer electrolyte of the present invention in a pore, for further improving membrane strength, flexibility and durability.

The polymer electrolyte composite membrane can be fabricated by impregnating a polymer electrolyte dispersed solution of the present invention into a porous substrate, and removing a dispersion medium. The porous substrate is not particularly restricted providing it satisfies the above-described use object. Examples thereof include porous membrane, woven fabric, non-woven fabric and fibril, and these can be used irrespective of forms and materials thereof. From the standpoint of the effect of reinforcing heat resistance and physical strength, the porous substrate is preferably a substrate made of an aliphatic polymer, aromatic polymer or fluorine-containing polymer.

The thickness of the porous substrate is preferably 1 to 100 μm, more preferably 3 to 30 μm, further preferably 5 to 20 μm. The pore diameter of the porous substrate is preferably 0.01 to 100 μm, more preferably 0.02 to 10 μm, and the void ratio of the porous substrate is preferably 20 to 98%, more preferably 40 to 95%.

When the thickness of the porous substrate is less than 1 μm, the effect of reinforcing strength after composite formation or the reinforcing effects such as imparting flexibility and durability become insufficient, and gas leak (cross leak) occurs easily. In contrast, when the thickness is over 100 μm, electric resistance increases, and proton conductivity lowers. When the pore diameter is less than 0.01 μm, a polymer electrolyte of the present invention cannot be filled easily, and when over 100 μm, the reinforcing effect of the polymer solid electrolyte composite membrane becomes weak. When the void ratio is less than 20%, the resistance of the composite membrane increases, and when over 98%, the strength of the porous substrate itself is generally weaken, thereby reducing the reinforcing effect.

The catalyst layers 14a, 14b adjacent to the polymer electrolyte membrane 12 are layers functioning as an electrode layer in a fuel cell, and either one of them is an anode catalyst layer, and the other is a cathode catalyst layer. As the catalyst layers 14a, 14b, those formed from the above-described catalyst ink containing a polymer electrolyte and a catalyst substance are suitable. In this case, the polymer electrolyte membrane 12 is not limited to the membrane using a polymer electrolyte of the present invention, and conventional polymer electrolyte membranes can also be used.

The catalyst substance is not particularly restricted providing it can activate the redox reaction with hydrogen or oxygen. Examples thereof include noble metals, noble metal alloys, and metal complexes. Particularly, platinum fine particles are preferable as the catalyst substance, and the catalyst layers 14a, 14b may also be one made of carbon in the form of particle or fiber such as activated carbon, and graphite carrying thereon platinum fine particles.

The gas diffusion layers 16a, 16b are disposed so as to sandwich the both sides of MEA 20, and promote diffusion of a raw material gas into the catalyst layers 14a, 14b. The gas diffusion layers 16a, 16b are preferably constituted of a porous material having electric conductivity, and for example, porous carbon non-woven fabric and carbon paper are preferable since they can efficiently transport a raw material gas into the catalyst layers 14a, 14b.

A membrane-electrode-gas diffusion electrode assembly (MEGA) is constituted of the polymer electrolyte membrane 12, catalyst layers 14a, 14b and gas diffusion layers 16a, 16b. Such MEGA can be produced, for example, by a method described below.

First, a catalyst substance and a solution containing a polymer electrolyte are or a catalyst substance and a polymer electrolyte dispersed solution are mixed to prepare a catalyst ink. In this embodiment, a polymer electrolyte dispersed solution is preferably used, and as the mixing apparatus, an ultrasonic dispersion apparatus, homogenizer, ball mill, planet ball mill and sand mill can be used. Other components constituting the catalyst ink are optional, and not

particularly restricted. For the purpose of enhancing water repellency of the catalyst layer, water repellent materials such as PTFE may be contained, for the purpose of enhancing the gas diffusion property of the catalyst layer, pore forming materials such as calcium carbonate may be contained, further, for the purpose of enhancing durability, stabilizers such as metal oxides and polymers having a phosphonic group may be contained, in some cases.

The above-described catalyst ink is coated on a carbon non-woven fabric, carbon paper and the like for forming the gas diffusion layers 16a, 16b, and the solvent and the like are vaporized, to obtain laminates having a catalyst layer formed on the gas diffusion layer. The method of coating the catalyst ink is not particularly restricted, and conventional methods such as a die coating, screen printing, spray method, and inkjet method can be used. Of them, a spray method is preferable since the operation thereof is industrially simple.

The resultant pair of laminates are placed so that respective catalyst layers face, and the polymer electrolyte membrane 12 is disposed between them, and these are pressure-bonded. Thus, MEGA having the above-described structure is obtained.

As the method of forming a catalyst layer on carbon non-woven fabric and carbon paper and the method of connecting this to a polymer electrolyte membrane, for example, methods described in J. Electrochem. Soc.: Electrochemical Science and Technology, 1988, 135(9), 2209, and the like can be applied.

The separators 18a, 18b are formed of a material having electric conductivity, and examples of the material include carbon, resin mold carbon, titanium, and stainless steel.

The fuel cell 10 can be obtained by sandwiching MEGA as described above by a pair of separators 18a, 18b, and connecting them.

The fuel cell of the present invention is not necessarily limited to those having the constitution as described above, and may have appropriately different constitution in a range not deviating from the purpose thereof. For example, in the above-described fuel cell 10, the polymer electrolyte containing a block copolymer obtained by the production method of the present invention described above is contained in both of the polymer electrolyte membrane 12 and catalyst layers 14a, 14b, however, the cell is not limited to this constitution, and the polymer electrolyte may be contained in either one of them. From the standpoint of obtaining a fuel cell excellent sufficiently in proton conductivity under low humidity conditions, it is preferable that the polymer electrolyte is contained in both of them. The fuel cell 10 may also be one obtained by sealing a cell having the structure described above with a gas seal body or the like.

The present invention has been described in detail above based on embodiments thereof. However, the present invention is not limited to the above-described embodiments. The present invention can be changed variously in a range not deviating from the purpose thereof.

Suitable examples of the present invention will be illustrated further in detail below, but the present invention is not limited to these examples.

(Example 1)

Production of electrolyte A

Into a 200 mL flask equipped with a Dean Stark tube was added 4.00 g (16.06 mmol) of sodium 2,5-dichlorobenzenesulfonate which is an aromatic monomer having an ion exchange group of the following formula (4), 6.90 g (44.17 mol) of 2,2'-bipyridyl, 533 mg (1.61 mmol) of 1-(4-bromobenzyloxy)-2,5-dichlorobenzene which is a tri-functional aromatic monomer of the following formula (5), 78 mL of dimethyl sulfoxide and 50 mL of toluene, and under an argon atmosphere, azeotropic dehydration was carried out at 135°C for 8 hours. Thereafter, toluene was distill off out of the system and the mixture was left to cool to 70°C. Then, 11.04 g (40.15 mol) of $Ni(cod)_2$ was added at one time at 70°C. Immediately after addition of $Ni(cod)_2$, the temperature rose to 87 to 88°C. The stirring was continued under this condition. About 3 minutes after addition of $Ni(cod)_2$, the polymerization solution was gelled. The stirring was continued under this condition for 30 minutes. After 30 minutes, the resultant polymerization solution in the form of gel was put into methanol, left overnight, then, washing with methanol of the generated crosslinked aromatic polymer and filtration thereof were repeated three times, and washing with 6 mol/L hydrochloric acid aqueous solution and filtration thereof were repeated three times, thereafter, washing with deionized water and filtration thereof were repeated until the filtrate became neutral, thereby allowing the crosslinked aromatic polymer to be swollen sufficiently. At this moment, the crosslinked aromatic polymer had a water absorption magnification (Ww/Wd) of 125. Next, 330 g of the above-described gel-like crosslinked aromatic polymer was placed into a mixer together with 150 g of deionized water, and ground for 5 minutes. Further, it was ground for 20 minutes by a homogenizer (manufactured by NIHONSEIKI KAISHA LTD., trade name " Ultrasonic Homogenizer US-150T") until the precipitate could not be recognized visually, to obtain a yellow polymer electrolyte dispersed solution having a solid concentration of 0.6 wt%. This dispersion was cast in a glass petri dish and dried at 80°C to obtain a polymer electrolyte membrane. The content of the residual chloro groups in this polymer electrolyte membrane was measured to find a value of less than 0.1 wt%. The content of the residual bromo groups in this polymer electrolyte membrane was measured to find a value of less than 0.1 wt%.

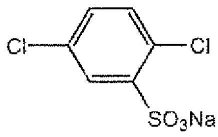 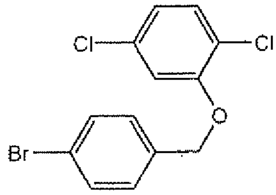

(4) (5)

(Example 2)

Production of electrolyte B

Into a 200 mL flask equipped with a Dean Stark tube was added 4.93 g (16.06 mmol) of sodium 3-(2,5-dichlorophenoxy)propane sulfonate which is an aromatic monomer having an ion exchange group of the following formula (6), 6.99 g (44.17 mmol) of 2,2'-bipyridyl, 553 mg (1.61 mmol) of 1-(4-bromobenzyloxy)-2,5-dichlorobenzene, 95 mL of dimethyl sulfoxide and 40 mL of toluene, and under reduced pressure, azeotropic dehydration was carried out at 100°C for 5 hours. Thereafter, toluene was distill off out of the system and the mixture was left to cool to 70°C. Then, 11.04 g (40.15 mmol) of $Ni(cod)_2$ was added at one time at 70°C. Immediately after addition of Ni $(cod)_2$, the temperature rose to 87 to 88°C. The stirring was continued without varying the bath temperature. About 2 minutes after addition of Ni $(cod)_2$, the polymerization solution was gelled, then, the mixture was left to cool to room temperature. Thereafter, the resultant polymerization solution in the form of gel was put into methanol, and washing with methanol of the generated crosslinked aromatic polymer and filtration thereof were repeated five times, and washing with 6 mol/L hydrochloric acid aqueous solution and filtration thereof were repeated five times, thereafter, washing with deionized water and filtration thereof were repeated until the filtrate became neutral, thereby allowing the crosslinked aromatic polymer to be swollen sufficiently. At this moment, the crosslinked aromatic polymer had a water absorption magnification (Ww/Wd) of 111. Next, 260 g of the above-described gel-like crosslinked aromatic polymer was placed into a mixer together with 210 g of deionized water, and ground for 5 minutes. Further, it was ground for 20 minutes by a homogenizer to obtain a polymer electrolyte water dispersion having a solid concentration of 0.5 wt%. This polymer electrolyte dispersed solution was cast in a glass petri dish and dried at 80°C to obtain a polymer electrolyte membrane. The content of the residual chloro groups in this polymer electrolyte membrane was measured to find a value of less than 0.1 wt%. The content of the residual bromo groups in this polymer electrolyte membrane was measured to find a value of less than 0.1 wt%.

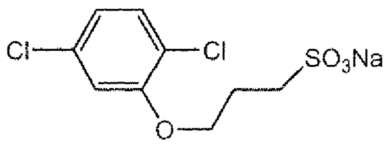 (6)

(Example 3)

Production of electrolyte C

Into a 200 mL flask equipped with a Dean Stark tube was added 4.00 g (16.06 mmol) of sodium 2,5-dichlorobenzenesulfonate, 7.24 g (46.38 mmol) of 2,2'-bipyridyl, 1.51 g of polyether sulfone having a chloro group on both ends of the following formula (7) (manufactured by Sumitomo Chemical Co., Ltd., trade name: "SUMIKA EXCELPES 5200P"), 553 mg (1.61 mmol) of 1-(4-bromobenzyloxy)-2,5-dichlorchenzene, 100 mL of dimethyl sulfoxide and 35 mL of toluene, and under an argon atmosphere, azeotropic dehydration was carried out at 100°C for 9 hours, then, toluene was distill off out of the system and the mixture was left to cool to 70°C. Then, 11.60 g (42.16 mmol) of $Ni(cod)_2$ was added at one time at 70°C. Immediately after addition of $Ni(cod)_2$, the temperature rose to 85°C. The stirring was continued without varying the bath temperature. About 5 minutes after addition of Ni $(cod)_2$, the polymerization solution was gelled. The stirring was continued under this condition for 30 minutes. Thereafter, the resultant polymerization solution in the form of gel was put into methanol, and washing with methanol of the generated crosslinked aromatic polymer/filtration thereof were repeated three times, and washing with 6 mol/L hydrochloric acid aqueous solution and

filtration thereof were repeated three times, washing with deionized water/filtration thereof were repeated until the filtrate became neutral, then, dried at 80°C to obtain 3.86 g of a solid crosslinked aromatic polymer. 1.40 g of the above-described solid crosslinked aromatic polymer was ground for 5 minutes in a sample mill, then, mixed with 149 g of deionized water, and the mixture was ground for 20 minutes by a homogenizer (manufactured by NIHONSEIKI KAISHA LTD., trade name " Ultrasonic Homogenizer US-150T") until the precipitate could not be recognized visually and this step was repeated three times, to obtain a 0.9 wt% polymer electrolyte dispersed solution. This dispersion was cast in a glass petri dish and dried at 80°C to obtain a polymer electrolyte membrane. The content of the residual chloro groups in this polymer electrolyte membrane was measured to find a value of less than 0.1 wt%. The content of the residual bromo groups in this polymer electrolyte membrane was measured to find a value of less than 0.1 wt%.

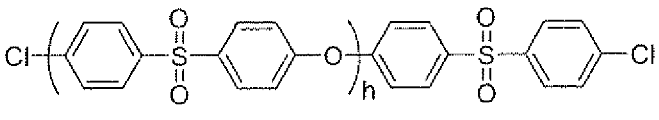

(7)

(Example 4)

Into a 200 mL flask equipped with a Dean Stark tube was added 4.93 g (16.06 mmol) of sodium 3- (2, 5-dichlorophenoxy) propane sulfonate, 6.97 g (44.62 mmol) of 2,2'-bipyridyl, 53 mg (0.16 mol) of 1-(4-bromobenzyloxy)-2,5-dichlorobenzene, 86 mL of dimethyl sulfoxide and 30 mL of toluene, and under an argon atmosphere, azeotropic dehydration was carried out at a bath temperature of 160°C for 2.5 hours, then, toluene was distill off out of the system and the mixture was left to cool to 70°C. Then, 11.15 g (40.55 mmol) of $Ni(cod)_2$ was added at one time at 70°C, and stirred without varying the bath temperature. One hour after addition of $Ni(cod)_2$, the polymerization solution was gelled to lose flowability, therefore, the reaction was stopped. Thereafter, the resultant polymerized substance in the form of gel was put into methanol, and washing with methanol of the generated crosslinked aromatic polymer and filtration thereof were repeated three times, and washing with 6 mol/L hydrochloric acid aqueous solution and filtration thereof were repeated three times, thereafter, washing with deionized water and filtration thereof were repeated until the filtrate became neutral, thereby allowing the crosslinked aromatic polymer to be swollen sufficiently. At this moment, the crosslinked aromatic polymer had a water absorption magnification of 206. Next, 448 g of the above-described gel-like crosslinked aromatic polymer was placed into a mixer together with 470 g of deionized water, and ground for 5 minutes, then, it was ground for 20 minutes by a homogenizer (manufactured by NIHONSEIKI KAISHA LTD., trade name " Ultrasonic Homogenizer US-150T") until the precipitate could not be recognized visually. This step was carried out once, to obtain a polymer electrolyte water dispersion having a solid concentration of 0.2 wt%. This polymer electrolyte dispersed solution was cast in a glass petri dish and dried at 80°C to obtain a polymer electrolyte membrane.

(Example 5)

Into a 200 mL flask equipped with a Dean Stark tube was added 1.19 g (3.88 mmol) of sodium 3-(2,5-dichlorophenoxy)propane sulfonate, 0.54 g (2.15 mmol) of 2,5-dichlorobenzophenone which is a monomer having no ion exchange group of the following formula (9), 2.68 g (17.16 mmol) of 2,2'-bipyridyl, 100 mg (0.30 mmol) of 1-(4-bromobenzyloxy)-2,5-dichlorobenzene, 32 mL of dimethyl sulfoxide and 30 mL of toluene, and under an argon atmosphere, azeotropic dehydration was carried out at a bath temperature of 160°C for 2 hours, then, toluene was distill off out of the system and the mixture was left to cool to 70°C. Then, 4.30 g (15.63 mmol) of $Ni(cod)_2$ was added at one time at 70°C, and stirred without varying the bath temperature. 30 seconds after addition of $Ni(cod)_2$, the polymerization solution was gelled to lose flowability. Stirring was continued for 30 minutes under this condition. 28 g of the polymerized substance was taken out from the polymerization solution and immersed in 207 g of dimethyl sulfoxide at room temperature for 1 hour. The polymerized substance was not dissolved and kept its form, and when filtrated and its weight was measured to find a value of 29 g. Thereafter, the resultant polymerized substance in the form of gel was put into methanol, and washing with methanol of the generated crosslinked aromatic polymer and filtration thereof were repeated three times, and washing with 6 mol/L hydrochloric acid aqueous solution and filtration thereof were repeated three times, thereafter, washing with deionized water and filtration thereof were repeated until the filtrate became neutral, thereby allowing the crosslinked aromatic polymer to be swollen sufficiently. At this moment, the crosslinked aromatic polymer had a water absorption magnification of 26. Next, 19 g of the above-described gel-like crosslinked aromatic polymer was placed into a mixer together with 481 g of deionized water, and ground for 10 minutes, this step was repeated twice, and further, it was ground for 20 minutes by a homogenizer (manufactured by NIHONSEIKI KAISHA LTD., trade name " Ultrasonic Homogenizer US-150T") until the precipitate could not be recognized visually, this step was repeated twice, to obtain a

polymer electrolyte water dispersion having a solid concentration of 0.1 wt%. This polymer electrolyte dispersed solution was cast in a glass petri dish and dried at 80°C to obtain a polymer electrolyte membrane.

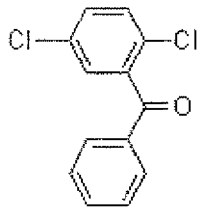
(9)

Production of electrolyte D

In to a 200 mL flask was added 5.00 g of polyether sulfone (synthesized from 4,4'-dichlorodiphenyl sulfone and 4,4' -dihydroxybiphenyl; number average molecular weight (Mn) : 22700, weight average molecular weight (Mw): 53300) and 80 g of concentrated sulfuric acid (concentration 96 to 98 wt%), and under an argon atmosphere, the mixture was stirred at room temperature for 144 hours. Thereafter, the reaction solution was dropped into 800 g of ice water, and the deposited sulfonated polyether sulfone of the following formula (8) was filtrated, and washed with 400 g of water of 5°C twice.

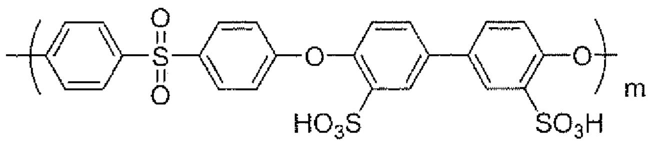
(8)

Then, the above-described sulfonated polyether sulfone was enclosed into a cellulose tube for dialysis membrane dialysis (manufactured by Sanko Junyaku Co., Ltd., trade name: "Dialysis Membrane UC36-32-100 Size 36/32": cut off molecular weight: 14000) together with 200 g of water, and exposed to flowing water at 25°C for 24 hours, to obtain 401 g of a 0.9 wt% polymer electrolyte dispersed solution. This dispersion was cast into a glass petri dish and dried at 80°C to obtain a polymer electrolyte membrane. The molecular weight of the polymer electrolyte constituting the polymer electrolyte membrane was measured to find that Mn was 81700 and Mw was 191000. For evaluation of the water resistance of the polymer electrolyte membrane, it was immersed into water of 23°C. The membrane was so decomposed that the membrane condition could not be maintained, that is, the water resistance thereof was extremely poor.

(Measurement of content of residual chloro group)

The content of the residual chloro groups in the polymer electrolyte membrane was measured under the following conditions.

Measurement method: oxygen flask combustion method - ion chromatograph method

Ion chromatograph apparatus: 2000 i manufactured by DIONEX
Separation column: AS4A-SC
Guard column: AG4A-SC
Suppressor: AMMS-III
Eluant flow rate: 1.5 mL/min
Eluant: 10 mM-$Na_2BO_7 \cdot 10H_2O$
Removal liquid: 12.5 mM-$H_2SO_4$
Detector: electric conductivity detector (30 $\mu$S)
Sample amount: 5 mg
Absorption liquid: deionized water

(Measurement of content of residual bromo group)

The content of the residual bromo groups in the polymer electrolyte membrane was measured under the following conditions.

Measurement method: oxygen flask combustion method - ion chromatograph method
Ion chromatograph apparatus: 2000 i manufactured by DIONEX
Separation column: AS12A-SC
Guard column: AG12A-SC
Suppressor: AMMS-III
Eluant flow rate: 1.5 mL/min
Eluant: 2.7 mM-$Na_2CO_3$ + 0.3 mM-$NaHCO_3$
Removal liquid: 12.5 mM-$H_2SO_4$
Detector: electric conductivity detector (30 μS)
Sample amount: 5 mg
Absorption liquid: 0.01 mol/L sodium hydroxide + hydrazine mono-hydrate

(Measurement of molecular weight)

The weight average molecular weight and number average molecular weight of the polymer electrolyte membrane were calculated by performing measurement according to gel permeation chromatography (GPC) under the following conditions and carrying out polystyrene-conversion.

(GPC conditions)

Column: one TSKgel $GMHH_{HR}$-M manufactured by TOSOH
Column temperature: 40°C
Mobile phase solvent: N,N-dimethylformamide (containing LiBr in an amount of 10 mmol/$dm^3$)
Solvent flow rate: 0.5 mL/min

(Measurement of proton conductivity (σ))

The polymer electrolyte membranes obtained in Examples 1 to 5 and Comparative Example 1 were processed into strip membrane samples having a width of 1.0 cm, and platinum plates (width: 5.0 mm) were pushed to the surface thereof so that the interval thereof was 1.0 cm, and the samples were kept in constant temperature and constant humidity vessels under conditions of 80°C and relative humidity of 90%, and 80°C and relative humidity of 50%, and the alternating impedance at $10^6$ to $10^{-1}$ Hz between the platinum plates was measured. The resultant value was substituted into the following formula, and the proton conductivity (σ) (S/cm) of each polymer electrolyte membrane was calculated.

$$\sigma\ (S/cm) = 1/(R \times d)$$

(in the formula, when the imaginary number component of the complex impedance was 0 on the cole cole plot, the actual number component of the complex impedance was R(Ω). d represents the thickness (cm) of the strip membrane sample.)

(Measurement of ion exchange capacity)

Given amounts of the polymer electrolyte membranes obtained in Examples 1 to 5 and Comparative Example 1 were weighed, and respective membranes were immersed into a 0.1 N sodium hydroxide standard aqueous solution for 2 hours. Then, the immersion solution containing the membrane was titrated with a 0.1 N hydrochloric acid aqueous solution, and from the neutralization point thereof, the ion exchange capacity (meq/g) of each polymer electrolyte membrane was calculated.

(Measurement of water absorption ratio)

The polymer electrolyte membranes obtained in Examples 1 to 5 and Comparative Example 1 were dried sufficiently at 105°C, and the weights thereof were measured. Then, the dried membranes were immersed in 50 g of deionized water at 23°C for 2 hours, and the weights thereof were measured. A change in weight before and after

immersion of the membrane into water was calculated, the resultant change ratio was used as the water absorption ratio.

(Measurement of weight retention)

The polymer electrolyte membranes obtained in Examples 1 to 5 and Comparative Example 1 were dried sufficiently at 105°C, and the weights thereof were measured. Then, the membranes were immersed in 50 g of deionized water at 23°C for 2 hours, then, the membranes were taken out and dried, and the membrane weights were weighed and the weight retention was calculated.

Table 1

| | | unit | Ex. 1 | Ex. 2 | Ex. 3 | Ex. 4 | Ex. 5 | Compar. Ex. 1 |
|---|---|---|---|---|---|---|---|---|
| Ion exchange capacity | | meq/g | 5.11 | 4.11 | 3.10 | 4.18 | 2.84 | 3.14 |
| Proton Conductivity | 80°C 90%RH | S/cm | $6.39 \times 10^{-1}$ | $3.66 \times 10^{-1}$ | $3.13 \times 10^{-1}$ | $4.76 \times 10^{-1}$ | $2.18 \times 10^{-1}$ | $2.16 \times 10^{-1}$ |
| | 80°C 50%RH | S/cm | $1.11 \times 10^{-1}$ | $0.42 \times 10^{-1}$ | $0.44 \times 10^{-1}$ | $0.66 \times 10^{-1}$ | $0.12 \times 10^{-1}$ | $0.27 \times 10^{-1}$ |
| Water absorption ratio | | % | 178 | 178 | 1422 | 2896 | 151 | unmeasurable |
| Weight retention | | % | 97 | 100 | 86 | 95 | 100 | unmeasurable |

The polymer electrolyte membranes obtained in Examples 1 to 5 showed excellent water retention property and water resistance, and high proton conductivity under low humidity conditions.

Industrial Applicability

The present invention can provide a crosslinked aromatic polymer showing sufficiently high water retention property and water resistance, and showing sufficiently excellent proton conductivity even under low humidity conditions, and a polymer electrolyte, polymer electrolyte membrane, catalyst ink, membrane-electrode assembly (MEA) and fuel cell each using this polymer.

## Claims

1. A crosslinked aromatic polymer which is produced by a process comprising a reaction step of reacting an aromatic monomer having an ion exchange group of the following general formula (1) and a poly-functional aromatic monomer of the following general formula (2) in a solvent, thereby generating a gel swollen with the solvent:

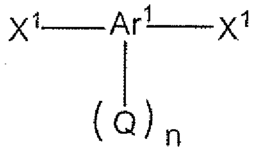

(1)

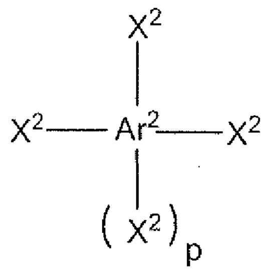

(2)

wherein, in the formulae,
$Ar^1$ represents a (2+n)-valent aromatic group,
$Ar^2$ represents a (3+p)-valent aromatic group,
Q represents an ion exchange group,
$X^1$ represents a functional group condensable with $X^1$ or $X^2$,
$X^2$ represents a functional group condensable with $X^1$ or $X^2$,
n represents an integer of 1 or more,
p represents an integer of 0 or more, and in this connection a plurality of $X^1$'s and $X^2$'s may be the same as or different from each other, respectively.

2. The crosslinked aromatic polymer according to Claim 1, wherein the content of the poly-functional aromatic monomer is 0.01 to 50 mole% with respect to the total amount of the aromatic monomer having an ion exchange group and the poly-functional aromatic monomer.

3. The crosslinked aromatic polymer according to Claim 1, wherein $X^1$ and $X^2$ are groups selected from the group consisting of halogeno groups, 4-methylphenylsulfonyloxy group and trifluoromethylsulfonyloxy group.

4. The crosslinked aromatic polymer according to Claim 1, comprising a bi-functional aromatic monomer having no ion exchange group of the following general formula (3), in addition to the aromatic monomers of the general formulae (1) and (2):

$$X^3\text{-}Ar^3\text{-}X^3 \qquad (3)$$

wherein, in the formula,
$Ar^3$ represents a di-valent aromatic group,
$X^3$ represents a functional group condensable with $X^1$ or $X^2$, and
in this connection a plurality of $X^3$'s may be the same as or different from each other.

5. The crosslinked aromatic polymer according to Claim 1, wherein the ion exchange group is a group selected from the group consisting of a sulfonic group,
perfluoroalkylenesulfonic group, perfluorophenylenesulfonic group, sulfonylimide group, phosphonic group and carboxyl group.

6. The crosslinked aromatic polymer according to Claim 1, wherein the ion exchange capacity is 0.5 to 10.0 meq/g.

7. A production process of a crosslinked aromatic polymer, comprising a reaction step of reacting an aromatic monomer having an ion exchange group of the following general formula (1) and a poly-functional aromatic monomer of the following general formula (2) in a solvent, thereby generating a gel swollen with the solvent:

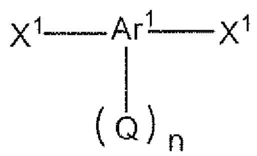

(1)

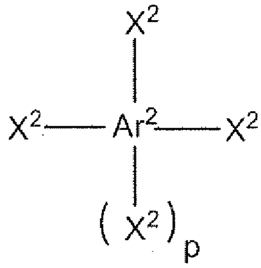

(2)

wherein, in the formulae,
$Ar^1$ represents a (2+n)-valent aromatic group,
$Ar^2$ represents a (3+p)-valent aromatic group,
Q represents an ion exchange group,
$X^1$ represents a functional group condensable with $X^1$ or $X^2$,
$X^2$ represents a functional group condensable with $X^1$ or $X^2$,
n represents an integer of 1 or more,
p represents an integer of 0 or more, and in this connection a plurality of $X^1$'s and $X^2$'s may be the same as or different from each other, respectively.

**8.** A polymer electrolyte comprising the crosslinked aromatic polymer as described in Claim 1.

**9.** A polymer electrolyte dispersed solution obtained by dispersing the crosslinked aromatic polymer as described in Claim 1 in a dispersion medium.

**10.** The polymer electrolyte dispersed solution according to Claim 9, wherein the content of the crosslinked aromatic polymer is 0.001 to 30 wt%.

**11.** The polymer electrolyte dispersed solution according to Claim 9, produced by a process comprising
a reaction step of reacting an aromatic monomer having an ion exchange group of the following general formula (1) and a poly-functional aromatic monomer of the following general formula (2) in a solvent, thereby generating a gel swollen with the solvent,
a solvent substitution step of substituting the solvent in the gel with water, thereby obtaining a water-absorbed gel, and
a dispersion step of dispersing the water-absorbed gel in a dispersion medium:

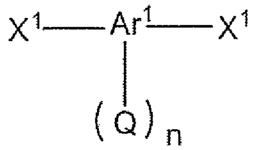

(1)

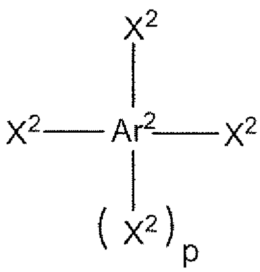

(2)

wherein, in the formulae,
$Ar^1$ represents a (2+n)-valent aromatic group,
$Ar^2$ represents a (3+p)-valent aromatic group,
Q represents an ion exchange group,
$X^1$ represents a functional group condensable with $X^1$ or $X^2$,
$X^2$ represents a functional group condensable with $X^1$ or $X^2$,
n represents an integer of 1 or more,
p represents an integer of 0 or more, and in this connection a plurality of $X^1$'s and $X^2$'s may be the same as or different from each other, respectively.

**12.** The polymer electrolyte dispersed solution according to Claim 9, produced by a process comprising
a reaction step of reacting an aromatic monomer having an ion exchange group of the following general formula (1) and a poly-functional aromatic monomer of the following general formula (2) in a solvent, thereby generating a gel swollen with the solvent,
a solvent removal step of removing the solvent from the gel, and
a dispersion step of dispersing the substance obtained in the solvent removal step with a dispersion medium:

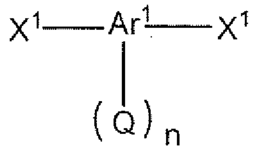

(1)

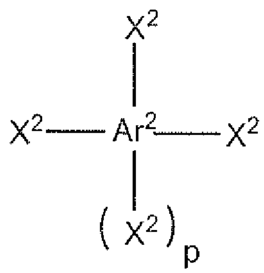

(2)

wherein, in the formulae
$Ar^1$ represents a (2+n)-valent aromatic group
$Ar^2$ represents a (3+p)-valent aromatic group,
Q represents an ion exchange group,
$X^1$ represents a functional group condensable with $X^1$ or $X^2$,
$X^2$ represents a functional group condensable with $X^1$ or $X^2$,
n represents an integer of 1 or more,
p represents an integer of 0 or more, and in this connection a plurality of $X^1$'s and $X^2$'s may be the same as or different from each other, respectively.

**13.** The polymer electrolyte dispersed solution according to Claim 9, wherein the dispersion medium contains water.

**14.** A catalyst ink comprising the polymer electrolyte as described in Claim 8 and a catalyst substance.

**15.** A catalyst ink comprising the polymer electrolyte dispersed solution as described in Claim 9 and a catalyst substance.

**16.** A polymer electrolyte membrane comprising the polymer electrolyte as described in Claim 8.

**17.** A polymer electrolyte membrane obtained from the polymer electrolyte dispersed solution as described in Claim 9.

**18.** A polymer electrolyte composite membrane, composed of a porous substrate having the polymer electrolyte as

described in Claim 8 in a pore.

**19.** A polymer electrolyte composite membrane obtained by impregnating the polymer electrolyte dispersed solution as described in Claim 9 into a porous substrate.

**20.** A membrane-electrode assembly having a polymer electrolyte membrane and a catalyst layer formed on the polymer electrolyte membrane, wherein the polymer electrolyte membrane contains the polymer electrolyte as described in Claim 8.

**21.** A membrane-electrode assembly having a polymer electrolyte membrane and a catalyst layer formed on the polymer electrolyte membrane, wherein the catalyst layers is formed from the catalyst ink as described in Claim 14.

**22.** A fuel cell having a pair of separators, a pair of gas diffusion layers disposed between the pair of separators, and a membrane-electrode assembly disposed between the pair of gas diffusion layers, wherein the membrane-electrode assembly is the membrane-electrode assembly as described in Claim 20 or 21.

Fig. 1

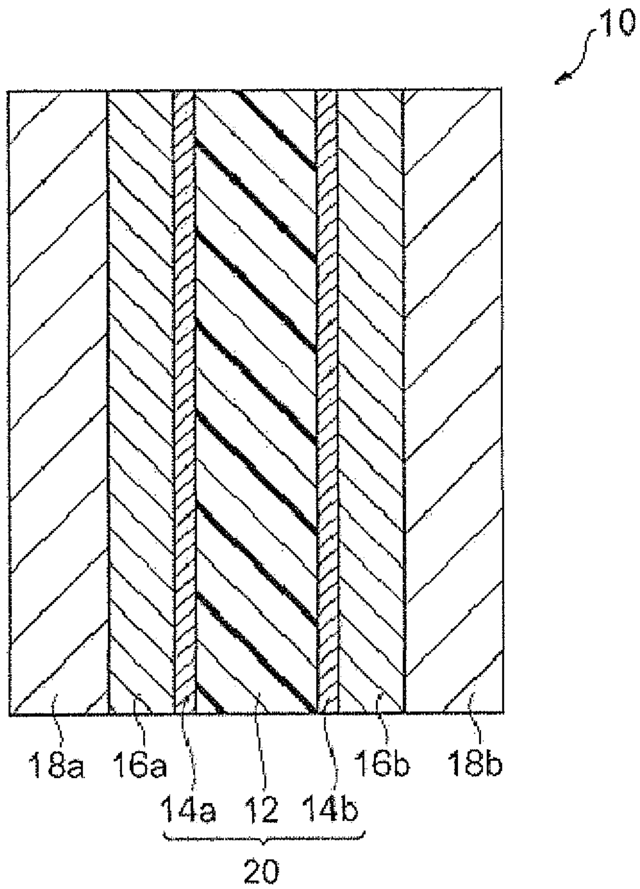

**INTERNATIONAL SEARCH REPORT**

International application No.
PCT/JP2008/059488

A. CLASSIFICATION OF SUBJECT MATTER
*C08G61/00*(2006.01)i, *H01B1/06*(2006.01)i, *H01M8/02*(2006.01)i, *H01M8/10*(2006.01)i

According to International Patent Classification (IPC) or to both national classification and IPC

B. FIELDS SEARCHED

Minimum documentation searched (classification system followed by classification symbols)
C08G61/00-73/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-107484 A (Kaneka Corp.), 08 April, 2004 (08.04.04), Claims; examples (Family: none) | 1-22 |
| A | JP 9-59355 A (Director General, Agency of Industrial Science and Technology), 04 March, 1997 (04.03.97), Full text (Family: none) | 1-22 |
| A | JP 2005-232211 A (Chisso Corp.), 02 September, 2005 (02.09.05), Claims; examples (Family: none) | 1-22 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 June, 2008 (06.06.08) | 17 June, 2008 (17.06.08) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2008/059488

C (Continuation). DOCUMENTS CONSIDERED TO BE RELEVANT

| Category* | Citation of document, with indication, where appropriate, of the relevant passages | Relevant to claim No. |
|---|---|---|
| A | JP 64-11127 A (Canon Inc.), 13 January, 1989 (13.01.89), Full text (Family: none) | 1-22 |
| A | JP 3-152122 A (Sumitomo Chemical Co., Ltd.), 28 June, 1991 (28.06.91), Claims; examples (Family: none) | 1-22 |
| A | JP 10-120782 A (International Business Machines Corp.), 12 May, 1998 (12.05.98), Claims; Abstract; examples & US 6241913 B1 | 1-22 |
| P,A | JP 2007-294408 A (Toyota Central Research and Development Laboratories, Inc.), 08 November, 2007 (08.11.07), Full text (Family: none) | 1-22 |
| A | JP 2005-248143 A (Sumitomo Chemical Co., Ltd.), 15 September, 2005 (15.09.05), Claims & EP 1721922 A1 & WO 2005/075535 A1 & CA 2556976 A & KR 10-2007-0008579 A & CN 1922236 A | 1-22 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003031232 A
- JP 2006137792 A
- JP 2005248143 A
- JP 2005320523 A
- JP 2007270118 A
- JP 2007284653 A


### Non-patent literature cited in the description


- **Kagaku Dojin.** *Seni kinzoku ga hiraku yukigosei,* 10 October 1997, 15
- *J. Electrochem. Soc.: Electrochemical Science and Technology,* 1988, vol. 135 (9), 2209